# EUROPÄISCHE PATENTSCHRIFT

(11) **EP 2 670 253 B1**
(45) Veröffentlichungstag und Bekanntmachung des Hinweises auf die Patenterteilung: **05.10.2016**
(21) Anmeldenummer: 11808828.5
(22) Anmeldetag: 13.12.2011
(51) Int. Cl.: A23L 27/30

(54) **KALORIENREDUZIERTE ZUSAMMENSETZUNGEN FÜR DIE HERSTELLUNG VON KAKAOHALTIGEN INSTANT-GETRÄNKEN**
REDUCED-CALORIE COMPOSITIONS FOR PRODUCING INSTANT DRINKS CONTAINING COCOA
COMPOSITIONS À TENEUR RÉDUITE EN CALORIES POUR LA PRODUCTION DE BOISSONS INSTANTANÉES CONTENANT DU CACAO

(30) Priorität: 31.01.2011 DE 102011009897; 23.02.2011 DE 102011012205
(43) Veröffentlichungstag der Anmeldung: 11.12.2013
(73) Patentinhaber: Krüger GmbH & Co. KG, 51469 Bergisch-Gladbach (DE)
(72) Erfinder: KRÜGER, Willibert, 51467 Bergisch Gladbach (DE)
(74) Vertreter: von Rohr, Hans Wilhelm
(86) Internationale Anmeldenummer: PCT/EP2011/006262
(87) Internationale Veröffentlichungsnummer: WO 2012/103911

(56) Entgegenhaltungen:
- EP-A1- 1 974 614
- EP-A2- 0 230 513
- WO-A1-2006/007993
- WO-A1-2006/108592
- WO-A1-2008/059064
- WO-A1-2009/135575
- DE-A1- 2 809 536
- DATABASE GNDP [Online] MINTEL; Februar 2002 (2002-02), Anonymous: "Powdered Malt Drink", XP002670578, gefunden im www.gnpd Database accession no. 138490
- SHITTU ET AL: "Factors affecting instant properties of powdered cocoa beverages", FOOD CHEMISTRY, ELSEVIER LTD, NL, Bd. 100, Nr. 1, 1. Januar 2007 (2007-01-01), Seiten 91-98, XP005517172, ISSN: 0308-8146, DOI: 10.1016/J.FOODCHEM.2005.09.013

## Beschreibung

Die vorliegende Erfindung betrifft das technische Gebiet der Herstellung von Instant-Getränkezusammensetzungen.

Die vorliegende Erfindung betrifft insbesondere eine zumindest im Wesentlichen saccharosefreie kakaohaltige Instant-Getränkezusammensetzung auf Basis eines Agglomerats oder Granulats, insbesondere Agglomerats, welche zur Herstellung eines vorzugsweise nichtkariogenen und/oder kalorienreduzierten kakaohaltigen Instant-Getränks durch Aufbereiten mit einer trinkbaren Flüssigkeit geeignet ist sowie ein Verfahren zu deren Herstellung.

Weiterhin betrifft die vorliegende Erfindung die Verwendung einer solchen kakaohaltigen Instant-Getränkezusammensetzung zur Herstellung eines vorzugsweise nichtkariogenen und/oder kalorienreduzierten kakaohaltigen Instant-Getränks durch Aufbereiten mit einer Trinkflüssigkeit, insbesondere Milch.

Der Begriff der Instant-Produkte stellt eine Bezeichnung für meist teilchen- bzw. pulverförmige, in Wasser lösliche bzw. dispergierbare Produkte überwiegend auf dem Gebiet der Nahrungs- und Geschmacksmittel, wie Kaffee-, Tee-, Kakao-, Milchprodukte etc., dar. Die Herstellung von Instant-Produkten erfolgt im Allgemeinen durch Extraktion der Nahrungs- und Geschmacksmittel bzw. deren Inhaltsstoffen, gefolgt von einer anschließenden Trocknung, insbesondere Gefrier-oder Sprühtrocknung. Für weitergehende Einzelheiten kann verwiesen werden auf Römpp Chemielexikon, Band 3, 10. Auflage, Georg-Thieme-Verlag, Stuttgart/New York, 1997, Seite 1936, Stichwort: "Instant-Produkte", sowie die dort referierte Literatur, deren jeweiliger Inhalt hiermit durch Bezugnahme eingeschlossen ist.

Auf diese Weise können unter anderem kakaohaltige Instant-Getränke hergestellt werden. Meist erfolgt die Herstellung unter Zugabe von Milch zu den entsprechenden kakaohaltigen Instant-Getränkezusammensetzungen; allerdings ist auch die Verwendung von Wasser oder anderen trinkbaren wässrigen Medien möglich.

In Bezug auf kakaohaltige Instant-Getränkezusammensetzungen bzw. die daraus hergestellten Instant-Getränke ist dabei oftmals ein gewisses Maß an Süße bei einem dennoch natürlichen und vollmundigen Kakao-Geschmack erwünscht, was im Stand der Technik durch Zusatz von süßenden Komponenten zu dem Kakao und gegebenenfalls weiteren Aromabestandteilen gewährleistet werden soll. In diesem Zusammenhang wird im Stand der Technik als süßende Komponente oftmals Kristallzucker bzw. Saccharose eingesetzt, wobei die kakaohaltigen Instant-Getränkezusammensetzungen des Standes der Technik oftmals einen sehr hohen Gehalt an Kristallzucker bzw. Saccharose aufweisen, um auf diese Weise dem aufbereiteten kakaohaltigen Instant-Getränk die gewünschte Süße zu verleihen; ein hoher Kristallzuckergehalt ist aber zum einen aus zahnmedizinischen Gründen unerwünscht, da er die Bildung von Karies fördert, und zum anderen ist ein hoher Kristallzuckergehalt ernähungsphysiologisch nachteilig, da der hohe Brennwert die Gewichtszunahme fördert und zudem den Insulinspiegel ansteigen lässt. Derartige kakaohaltige Instant-Getränkezusammensetzungen des Standes der Technik sind somit insbesondere auch für Diabetiker weniger geeignet bzw. nicht vorteilhaft.

Vor diesem Hintergrund ist man im Stand der Technik dazu übergegangen, einen Teil des Kristallzuckers bzw. der Saccharose durch alternative Süßungskomponenten zu ersetzen. Insbesondere besteht ein Ansatz im Stand der Technik darin, den aus ernährungsphysiologischer und zahnmedizinischer Sicht nachteiligen Zucker in Form von Saccharose bzw. Kristallzucker teilweise durch so genannte Süßstoffe zu ersetzen. Aufgrund der hohen Süßkraft der im Stand der Technik eingesetzten Süßstoffe kann es aber schnell zu einer Übersüßung des aus der Zusammensetzung hergestellten Trinkproduktes kommen. Auch ist der artifizielle, insbesondere bittere Beigeschmack von Süßstoffen unerwünscht. Insbesondere bei kakaohaltigen Instant-Getränkezusammensetzungen bzw. daraus hergestellten Instant-Getränken wird der Geschmack des Kakaos häufig von der starken Süßkraft und dem unerwünschten Beigeschmack der Süßstoffe überlagert bzw. überdeckt oder aber beeinträchtigt. Die diesbezüglich im Stand der Technik bekannten Instant-Getränkezusammensetzungen weisen insbesondere nicht immer eine natürlich schmeckende Süße auf, und die Dosierbarkeit ist mitunter nicht optimal, was maßgeblich auch mit der hohen Süßkraft der verwendeten Süßstoffe zusammenhängt.

Zudem ist es im Stand der Technik bislang nicht in zufriedenstellendem Maße gelungen, stabile Granulate oder Agglomerate auf Basis kakaohaltiger Instant-Getränkezusammensetzungen bereitzustellen, wenn ein großer Teil des Kristallzuckers (Saccharose) ersetzt wird. Insbesondere die Kornstabilität sowie das Abriebverhalten solcher Zusammensetzungen des Standes der Technik sind häufig nicht optimal, was insbesondere einer guten Handhabung sowie längeren Lagerzeiten entgegensteht. Weiterhin können bestimmte Süßstoffe - eingesetzt in größeren Mengen - ernährungsphysiologisch insofern bedenklich sein, als zahlreiche Süßstoffe die Insulinausschüttung fördern, was wiederum in einem gesteigerten Hungergefühl resultieren kann.

In diesem Lichte sind im Stand der Technik bislang zahlreiche Versuche unternommen worden, Kristallzucker bzw. Saccharose auch durch andere, von Süßstoffen verschiedene Süßungsmittel zu ersetzen, insbesondere auch im Hinblick auf die Aufrechterhaltung des Süßgeschmacks. Stabile Granulate oder Agglomerate konnten aber hierbei nicht erhalten werden. Insbesondere ist dabei die Verarbeitbarkeit solcher Zusammensetzungen auf Basis fetthaltiger Komponenten einerseits und wasserlöslicher Komponenten andererseits problematisch, da sich eine stabile Agglomeration oder Granulation oftmals schwierig gestaltet. Meist resultieren instabile Agglomerate bzw. Granulate mit begrenzter Haltbarkeit bzw. Lagerungsfähigkeit sowie schlechtem Dosierverhalten. Auch die organoleptischen Eigenschaften derartiger Zusammensetzungen sind nicht immer optimal, da der Süßungsgrad oftmals nicht ausreicht bzw. unerwünschte Geschmacksbeeinträchtigungen, insbesondere in Form eines bitteren Beigeschmacks, auftreten.

Darüber hinaus weist eine Vielzahl der handelsüblichen kakaohaltigen Instant-Getränkemischungen zudem den Nachteil auf, dass sie oftmals als feinteiliges Pulver oder allenfalls als instabiles Agglomerat bzw. Granulat vorliegen, wobei diese Produkte - auch bedingt durch die mechanische Instabilität der zugrundeliegenden Partikel - oft zu einer hohen Staubentwicklung neigen, was sowohl bei ihrer Herstellung als auch bei ihrer Verpackung und schließlich auch bei der Handhabung durch den Endverbraucher nachteilig ist. Zudem weisen solche Instant-Produkte eine schlechte Dosierbarkeit auf. Weiterhin sind die pulverbasierten Instant-Produkte des Standes der Technik nicht immer in der Trinkflüssigkeit, insbesondere Milch, optimal löslich, da sie beim Einbringen in die Flüssigkeit mitunter zum Verklumpen neigen. Des Weiteren ist bei solchen Instant-Getränkezusammensetzungen des Standes der Technik, insbesondere auch bei längerer Lagerung, oftmals eine Tendenz zur Klumpenbildung zu beobachten.

Ein weiterer Ansatz, die negativen Eigenschaften von Kristallzucker bzw. Saccharose zumindest teilweise zu kompensieren, besteht darin, dass bislang versucht wurde, den Kristallzucker bzw. die Saccharose partiell und somit nur teilweise durch Zuckeraustauschstoffe zu ersetzen. Diesbezüglich konnte grundsätzlich gezeigt werden, dass sich Zuckeraustauschstoffe insbesondere hinsichtlich des Geschmackes der resultierenden kakaohaltigen Instant-Getränkezusammensetzungen bzw. der wiederum hieraus hergestellten Instant-Getränke als Komponente zum teilweisen Austausch von Saccharose bzw. Kristallzucker eignen, die resultierenden Zusammensetzungen jedoch mitunter nicht immer optimale physikalische bzw. mechanische Eigenschaften der resultierenden Granulate oder Agglomerate aufweisen: Insbesondere Kornstabilität und Abriebfestigkeit lassen sich auf diesem Wege nicht in hinreichender Qualität umsetzen. Insbesondere neigen die auf dieser Basis hergestellten Zusammensetzungen oftmals zu einer übermäßigen Staubbildung bzw. zu einem Zerfall der Produkte. Zudem ist das Löslichkeitsverhalten derartiger Zusammensetzungen mitunter nicht zufriedenstellend, und auch die Aufnahme bzw. Inkorporation des Kakaos sowie von aroma- bzw. geschmacksbildenden Komponenten ist mitunter verbesserungsfähig. Schließlich sind auch die organoleptischen Eigenschaften nicht immer zufriedenstellend.

Die WO 2006/007993 A1 betrifft kakaohaltige Pulver mit Palatinose bzw. Isomaltulose, insbesondere zur Herstellung von Instant-Fertiggetränken, welche 9 bis 60 Gew.-% einer Kakaokomponente, 1 bis 40 Gew.-% eines Zusatzstoffes sowie 20 bis 90 Gew.-% Palatinose bzw. Isomaltulose enthalten.

Weiterhin betrifft die WO 2006/108592 A1 geformte Instant-Stücke, welche zur Herstellung eines Instant-Nahrungsmittels oder Instant-Arzneimittels, insbesondere eines Instant-Getränks, geeignet sind. Die Instant-Stücke können unter anderem Ovomaltine enthalten. Darüber hinaus betrifft die Druckschrift ein Verfahren zur Herstellung der geformten Instant-Stücke aus einer Instant-Zusammensetzung.

Die Aufgabe der vorliegenden Erfindung besteht somit darin, eine kakaohaltige Instant-Getränkezusammensetzung bereitzustellen, welche sich zur Herstellung eines vorzugsweise nichtkariogenen und/oder kalorienreduzierten Instant-Getränks durch Aufbereiten mit einer Trinkflüssigkeit eignet und welche die zuvor geschilderten Nachteile des Standes der Technik zumindest teilweise vermeidet oder aber zumindest verringert bzw. abschwächt. Dabei soll die kakaohaltige Instant-Getränkezusammensetzung bevorzugt in Form eines Agglomerats oder Granulats mit verbesserten Eigenschaften, insbesondere im Hinblick auf Stabilität und Dosierbarkeit, vorliegen.

Insbesondere besteht die Aufgabe der vorliegenden Erfindung darin, eine kakaohaltige Instant-Getränkezusammensetzung bereitzustellen, welche gegenüber dem Stand der Technik auch im Hinblick auf zahnmedizinische Aspekte verbessert ist und zudem einen reduzierten Brennwert aufweist bzw. kalorienreduziert ist, wobei die Instant-Getränkezusammensetzung bzw. das hieraus hergestellte Instant-Getränk eine angenehme bzw. natürlich schmeckende Süße sowie ein angenehmes Aroma bzw. einen angenehmen Geschmack aufweisen soll. Zudem sollen auch die Dosierbarkeit und das Verklumpungsverhalten sowohl beim Einbringen der Instant-Getränkezusammensetzung in eine Trinkflüssigkeit als auch bei ihrer Lagerung verbessert werden.

Die Anmelderin hat nunmehr in völlig überraschender Weise gefunden, dass auf Basis einer Kombination von Isomaltulose einerseits und mindestens einem Zuckeraustauschstoff bzw. einem von Saccharose verschiedenen Zucker andererseits als agglomerat- bzw. granulatbildende Komponente stabile und hinsichtlich ihres Löslichkeitsverhaltens verbesserte Agglomerate oder Granulate hergestellt werden können, und dies auch, wenn diese - wie erfindungsgemäß vorgesehen - zumindest im Wesentlichen frei von Saccharose sind, wobei die erfindungsgemäßen Zusammensetzungen auf Basis eines solchen Granulats oder Agglomerats zudem eine optimale Süße und insgesamt positive organoleptische Eigenschaften bei gleichzeitig aromatischem Kakaogeschmack aufweisen. Dies ist im Rahmen der vorliegenden Erfindung - wie nachfolgend noch ausführlich angeführt - durch die zuvor erwähnte gezielte Kombination von Isomaltulose einerseits mit mindestens einem Zuckeraustauschstoff bzw. einem von Saccharose verschiedenen Zucker andererseits als agglomerat- oder granulatbildende Komponente gelungen.

Zur Lösung der zuvor geschilderten Aufgabe schlägt die vorliegende Erfindung somit eine Zusammensetzung (d. h. eine kakaohaltige Instant-Getränkezusammensetzung) nach Anspruch 1 vor; weitere vorteilhafte Ausgestaltungen sind Gegenstand der diesbezüglichen Unteransprüche.

Weiterer Gegenstand der vorliegenden Erfindung ist ein Verfahren zur Herstellung der erfindungsgemäßen kakaohaltigen Instant-Getränkezusammensetzung nach Anspruch 11; weitere Ausgestaltungen sind Gegenstand des diesbezüglichen Unteranspruchs.

Weiterer Gegenstand der vorliegenden Erfindung ist die nach dem erfindungsgemäßen Verfahren erhältliche kakaohaltige Instant-Getränkezusammensetzung nach Anspruch 12.

Weiterer Gegenstand der vorliegenden Erfindung ist - gemäß Anspruch 13 - die erfindungsgemäße Verwendung der Zusammensetzung nach der vorliegenden Erfindung.

Es versteht sich von selbst, dass besondere Ausgestaltungen und Ausführungsformen, welche nur im Zusammenhang mit einem Erfindungsaspekt beschrieben sind, auch in Bezug auf die anderen Erfindungsaspekte entsprechend gelten, ohne dass dies ausdrücklich beschrieben ist.

Bei allen nachstehend genannten relativen bzw. prozentualen gewichtsbezogenen Mengenangaben ist zu beachten, dass diese im Rahmen der erfindungsgemäßen Zusammensetzung vom Fachmann derart auszuwählen sind, dass sie sich in der Summe - gegebenenfalls unter Einbeziehung optionaler weiterer Komponenten bzw. Inhaltsstoffe bzw. Zusatzstoffe bzw. Bestandteile, insbesondere wie nachfolgend definiert - stets zu 100 % bzw. 100 Gew.-% ergänzen. Dies versteht sich für den Fachmann aber von selbst. Im Übrigen gilt, dass der Fachmann anwendungsbezogen oder einzelfallbedingt von den nachfolgend aufgeführten Mengenangaben abweichen kann, ohne dass er den Rahmen der vorliegenden Erfindung verlässt.

Gegenstand der vorliegenden Erfindung - gemäß einem ersten Aspekt der vorliegenden Erfindung - ist somit eine kakaohaltige Instant-Getränkezusammensetzung, welche zur Herstellung eines vorzugsweise nichtkariogenen und/oder kalorienreduzierten kakaohaltigen Instant-Getränks durch Aufbereiten mit einer trinkbaren Flüssigkeit geeignet ist, wobei die Zusammensetzung zumindest im Wesentlichen frei von Saccharose ist und wobei die Zusammensetzung in Form eines Granulats oder Agglomerats, insbesondere Agglomerats, vorliegt,
wobei die Zusammensetzung
(a) als Granulat- oder Agglomeratbildner eine Kombination von Isomaltulose mit mindestens einem Zuckeraustauschstoff und/oder mit mindestens einem von Saccharose verschiedenen Zucker in einem Verhältnis [Isomaltulose : (Zuckeraustauschstoff und/oder von Saccharose verschiedener Zucker)] im Bereich von 40 : 1 bis 2 : 1 und in einer Menge von 30 bis 85 Gew.-%, bezogen auf die Zusammensetzung und/oder das Granulat oder Agglomerat, und
(b) Kakao, insbesondere Kakaopulver, sowie
(c) gegebenenfalls mindestens einen Aroma- und/oder Geschmacksbildner enthält,
wobei die Partikel des Granulats oder Agglomerats eine Druckfestigkeit, berechnet als Gewichtsbelastbarkeit pro Partikel, von mindestens 0,01 N aufweisen, wobei die Zusammensetzung, bezogen auf die Zusammensetzung, eine Gesamtrestfeuchte von 1 bis 5 Gew.-% aufweist und wobei das Granulat oder Agglomerat eine diskrete Teilchengrößenverteilung aufweist, wobei 90 % der Partikel eine Partikelgröße, bezogen auf mindestens eine Raumrichtung, von 0,02 bis 5 mm aufweisen,
wobei der Zuckeraustauschstoff ausgewählt ist aus der Gruppe von Erythrit, Mannit, Xylit, Sorbit, Isomaltit, Maltit, Lactit, Galactit und deren Mischungen, und/oder wobei der von Saccharose verschiedene Zucker ausgewählt ist aus der Gruppe von Mannose, Maltose, Glucose, Fructose, Lactose, Xylose, Maltodextrin und deren Mischungen und
wobei die Zusammensetzung mindestens einen lebensmittelkompatiblen Emulgator in einer Menge von 0,5 bis 1,5 Gew.-%, bezogen auf die Zusammensetzung und/oder das Granulat und/oder Agglomerat, enthält, wobei der lebensmittelkompatible Emulgator ausgewählt ist aus der Gruppe von Lecithinen, Monoglyceriden, Diglyceriden und deren Mischungen.

Denn die Anmelderin hat überraschenderweise herausgefunden, dass sich durch den gezielten Einsatz eines Granulat- oder Agglomeratbildners auf Basis einer speziellen Kombination von Isomaltulose mit mindestens einem Zuckeraustauschstoff und/oder mit mindestens einem von Saccharose verschiedenen Zucker eine kakaohaltige Instant-Getränkezusammensetzung herstellen lässt, welche gegenüber dem Stand der Technik signifikant verbesserte Eigenschaften aufweist:

Diesbezüglich haben die Forschungsergebnisse der Anmelderin in völlig überraschender Weise gezeigt, dass es möglich ist, insbesondere hinsichtlich ihrer Stabilität und ihres Löslichkeitsverhaltens verbesserte granulat- oder agglomeratbasierte Zusammensetzungen bereitzustellen, welche über eine ausgezeichnete Lagerstabilität und ein verbessertes Riesel- und Löslichkeitsverhalten bei guten Dosiereigenschaften verfügen und welche auch nicht zur Bildung von Staub neigen, was die Handhabung sowohl bei der Herstellung als auch bei der Abfüllung sowie schließlich auch bei der nachfolgenden Anwendung deutlich verbessert. Weiterhin weisen die erfindungsgemäßen Instant-Getränkezusammensetzungen eine äußerst hohe Kornstabilität und Abriebfestigkeit auf.

Die erfindungsgemäßen Zusammensetzungen weisen dabei in völlig überraschender Weise auch eine verbesserte Inkorporierung bzw. Aufnahme des Kakaos, insbesondere des Kakaopulvers, sowie gegebenenfalls von optionalen aroma- bzw. geschmacksbildenden Komponenten auf.

Im Rahmen der vorliegenden Erfindung ist es völlig überraschend, dass auf Basis des speziellen Granulat- bzw. Agglomeratbildners - welcher gewissermaßen als Gerüst- bzw. Matrixbildner fungiert - stabile Granulate bzw. Agglomerate mit definierter Strukturgebung bereitgestellt werden können, in welche der fetthaltige Kakao und gegebenenfalls Aroma- bzw. Geschmackskomponenten in hervorragender Weise eingelagert werden können.

Darüber hinaus zeichnet sich die erfindungsgemäße kakaohaltige Instant-Getränkezusammensetzung dadurch aus, dass diese sowohl aus ernährungsphysiologischer als auch aus zahnmedizinischer Sicht deutlich verbessert ist, da sowohl der Brennwert als auch die Kariogenität gegenüber handelsüblichen kakaohaltigen Instant-Getränkezusammensetzungen deutlich verringert sind.

Dabei sind die organoleptischen Eigenschaften der erfindungsgemäßen Zusammensetzung insbesondere auch dahingehend verbessert, dass die resultierenden Instant-Getränke insbesondere im Hinblick auf ihren Süßgeschmack mit denen von saccharosehaltigen Instant-Getränken vergleichbar sind und gleichzeitig das Aroma der Kakaokomponente vollmundig zum Tragen kommt. Die erfindungsgemäßen Zusammensetzungen bzw. die daraus hergestellten Instant-Getränke weisen eine natürlich schmeckende Süße auf. Insbesondere weisen die mit der erfindungsgemäßen Zusammensetzung zubereiteten Instant-Getränke einen natürlichen Süßgeschmack ohne nachteiligen bitteren Beigeschmack auf.

Im Hinblick auf die kakaohaltige Instant-Getränkezusammensetzung nach der Erfindung ist eine wesentliche Idee der vorliegenden Erfindung somit darin zu sehen, dass als Granulat- bzw. Agglomeratbildner eine spezielle Kombination von Isomaltulose einerseits mit mindestens einem Zuckeraustauschstoff bzw. einem von Saccharose verschiedenen Zucker eingesetzt wird. Diesbezüglich werden in völlig überraschender Weise besonders gute Ergebnisse hinsichtlich der resultierenden Granulate bzw. Agglomerate erreicht, insbesondere was deren (Korn-)Stabilität, Abriebfestigkeit, Schütt- bzw. Rieselfähigkeit, Dosierbarkeit, Löslichkeitsverhalten und dergleichen anbelangt.

Darüber hinaus ist es im Rahmen der vorliegenden Erfindung gelungen, Granulate oder Agglomerate bereitzustellen, welche auch auf Basis der diesbezüglich eingesetzten granulat- bzw. agglomeratbildenden Komponenten einen hervorragenden Geschmack sowie eine definierte Süße bei gleichzeitig vollmundigem Schokoladen- bzw. Kakaogeschmack aufweisen.

Der Begriff "Granulat", wie er erfindungsgemäß verwendet wird, ist dabei sehr breit zu verstehen und bezieht sich insbesondere auf eine Bereitstellung der erfindungsgemäßen Zusammensetzung in Form von kleinen, insbesondere festen und gegebenenfalls porösen Partikeln, wie Körnern oder Kugeln, mit definierter Größe, wobei die dem Granulat zugrundeliegenden Partikel bzw. Teilchen im Allgemeinen eine makroskopische Größe aufweisen, insbesondere auf Basis der nachfolgend definierten Teilchengrößen bzw. -durchmesser. Insbesondere können die Granulatpartikel auch uneben ausgebildet sein bzw. keine harmonische geometrische Form aufweisen. Erfindungsgemäß kann es möglich sein, dass die Granulatpartikel dergestalt ausgebildet sind, dass die Form einer Kugel, eines Stäbchens, eines Zylinders usw. im Allgemeinen ungefähr und/oder andeutungsweise erhalten ist. Gleichermaßen können die den Granulaten zugrundeliegenden Teilchen bzw. Partikel mehr oder weniger porös ausgebildet sein. Zu weitergehenden Einzelheiten zu dem Begriff der Granulate kann insbesondere verwiesen werden auf Römpp Chemielexikon, 10. Auflage, Georg-Thieme-Verlag, Stuttgart/New York, Band 2, 1997, Seite 1600, Stichwort: "Granulate" und "Agglomerate", sowie die dort referierte Literatur, deren jeweiliger Inhalt durch Bezugnahme eingeschlossen ist.

Was den Begriff der "Agglomerate" betrifft, so ist auch dieser Begriff, wie er erfindungsgemäß verwendet wird, sehr umfassend und breit zu verstehen und bezeichnet ganz allgemein insbesondere poröse Partikel beliebiger Geometrie und Größe, welche aus einem Verbund kleinerer Bestandteile bzw. Ausgangspartikel gebildet sind.

Der Begriff "Granulatbildner" bzw. "Agglomeratbildner", wie er im Rahmen der vorliegenden Erfindung verwendet wird, ist ebenfalls sehr breit zu verstehen und bezieht sich insbesondere auf die erfindungsgemäß angeführten Substanzen zur Ausbildung einer Träger- oder Matrixstruktur bzw. auf ein Träger- und/oder Matrixmaterial zur Ausbildung eines aus Partikeln bzw. Teilchen bestehenden Granulats oder Agglomerats. Der Granulat- oder Agglomeratbildner bildet sozusagen die Matrix bzw. das Gerüst des Granulats oder Agglomerats bzw. der einzelnen Partikel des Granulats oder Agglomerats. Erfindungsgemäß kann der Granulat- oder Agglomeratbildner auf einer Mischung, insbesondere homogenen Mischung, von Substanzen bzw. Stoffen basieren, nämlich erfindungsgemäß auf Basis von Isomaltulose einerseits und einem Zuckeraustauschstoff bzw. einem von Saccharose verschiedenen Zucker andererseits, wie nachfolgend noch angeführt.

Im Rahmen der vorliegenden Erfindung ermöglicht der Granulat- oder Agglomeratbildner insbesondere die Aufnahme bzw. Inkorporation des Kakaos sowie gegebenenfalls weiterer Substanzen, wie insbesondere Aroma- bzw. Geschmacksbildnern. In dem Granulat- oder Agglomeratbildner bzw. dem daraus resultierenden Granulat oder Agglomerat können somit die weiteren Inhaltsstoffe der erfindungsgemäßen Zusammensetzung, wie Aroma- und/oder Geschmacksstoffe, aufgenommen bzw. inkorporiert bzw. eingelagert sein. In diesem Zusammenhang können die zu inkorporierenden Substanzen gleichermaßen an der Ausbildung der Granulate oder Agglomerate beteiligt sein.

Der Granulat- oder Agglomeratbildner ermöglicht auch eine insbesondere homogene und/oder insbesondere langzeitstabile Mischung der jeweiligen Komponenten bzw. Inhaltsstoffe. Darüber hinaus kann der Granulat- oder Agglomeratbildner auch nach Art eines Füllstoffs fungieren, was insbesondere auch zu einer Verbesserung der Dosierbarkeit der Instant-Getränkezusammensetzungen nach der Erfindung führt. Der Granulat- oder Agglomeratbildner führt insbesondere zur Ausbildung formstabiler und beständiger Granulate oder Agglomerate. Der Granulat- oder Agglomeratbildner kann gleichermaßen auch als Süßungsmittel fungieren bzw. eingesetzt werden, insbesondere da erfindungsgemäß süß schmeckende Substanzen als granulatbildende Komponenten eingesetzt werden.

Die erfindungsgemäß verwendete Isomaltulose (welche z. B. unter der Handelsbezeichnung Palatinose^{®} erhältlich ist) stellt insbesondere ein Disaccharid dar, das üblicherweise aus Rübenzucker gewonnen werden kann und auch als natürlicher Bestandteil von Honig oder Zuckerrohr vorkommt und dessen natürliche Süße der des Zuckers sehr nahekommt. Isomaltulose weist den zentralen Vorteil auf, dass diese nichtkariogen ist, d. h. von Karies erzeugenden Bakterien der Mundflora nicht zur Säurebildung verwendet werden kann. Genau wie Zucker wird Isomaltulose verstoffwechselt, wobei der kalorische Wert etwa 4 kcal/g beträgt. Im Gegensatz zu Zucker findet die Verstoffwechselung von Isomaltulose jedoch wesentlich langsamer statt, so dass die glykämische Wirkung sehr niedrig ist und die Glucose dem Körper über einen längeren Zeitraum zur Verfügung gestellt wird. Für den Menschen bedeutet dies insbesondere Folgendes: Wenn die Glucose nur langsam ins Blut übergeht, bleibt der Blutzuckerspiegel stabiler, und dem Körper steht die Energie aus dem Kohlenhydrat über einen längeren Zeitraum zur Verfügung. Dies hat auch zur Folge, dass eine Nutzung der aus der Glucose gewonnenen chemischen Energie für physiologische Prozesse erfolgen kann, wobei zumindest im Wesentlichen keine Umwandlung bzw. Speicherung in Form von Fetten erfolgt.

Im Hinblick auf den im Rahmen der erfindungsgemäßen Zusammensetzung eingesetzten Granulatbildner spielt die gezielte Kombination von Isomaltulose einerseits mit mindestens einem Zuckeraustauschstoff bzw. mit mindestens einem von Saccharose verschiedenen Zucker eine zentrale Rolle hinsichtlich der Ausbildung spezieller Produkteigenschaften. So werden auf Basis der zweckgerichteten Kombination der jeweiligen Substanzen Granulate mit den zuvor beschriebenen verbesserten Eigenschaften erhalten. Durch die gezielte Verwendung von Isomaltulose einerseits und den Komponenten auf Basis eines Zuckeraustauschstoffes und/oder eines von Saccharose verschiedenen Zuckers andererseits wird gleichermaßen die Aufnahme bzw. Inkorporation des fetthaltigen Kakaos sowie gegebenenfalls von aroma- und geschmacksbildenden Komponenten in das Granulat ermöglicht bzw. weiterführend verbessert.

Der Begriff "Zuckeraustauschstoff', wie er im Rahmen der vorliegenden Erfindung verwendet wird, ist sehr breit zu verstehen und betrifft insbesondere eine Sammelbezeichnung für Stoffe, welche insbesondere anstelle von Saccharose zur Süßung von Lebensmitteln verwendet werden können. Im Gegensatz zu den mitunter intensiv und künstlich schmeckenden Süßstoffen, von denen der Begriff der Zuckeraustauschstoffe im Allgemeinen abgegrenzt wird, werden Zuckeraustauschstoffe technologisch wie Saccharose eingesetzt, d. h. sie besitzen einen "Körper" und einen physiologischen Brennwert (nutritive Zuckeraustauschstoffe). Die Süßkraft entspricht in weiten Grenzen etwa der von Saccharose. Der physiologische Vorteil der Zuckeraustauschstoffe im Vergleich zur Saccharose liegt in der insulinunabhängigen Metabolisierung, was einen Vorteil für Diabetiker darstellt, und in der verminderten kariogenen Wirkung. Für einige Zuckeraustauschstoffe ist sogar eine antikariogene Wirkung beschrieben. Aufgrund ihrer Herkunft sowie ihrer chemischen Struktur sind die natürlich vorkommenden Zuckeraustauschstoffe von den Süßstoffen abzugrenzen. Für weitergehende Einzelheiten zu dem Begriff der Zuckeraustauschstoffe kann beispielsweise verwiesen werden auf Römpp Lexikon Chemie, Band 6, 10. Auflage, Georg-Thieme-Verlag, Stuttgart/New York, 1999, Seite 5098 bis 5100, Stichwort: "Zuckeraustauschstoffe", und auf Römpp Lexikon Lebensmittelchemie, 1. Auflage, Georg-Thieme-Verlag, Stuttgart/New York, 1995, Seite 955, Stichwort: "Zuckeraustauschstoffe" sowie auf die dort jeweils referierte Literatur, deren jeweiliger Inhalt hiermit durch Bezugnahme eingeschlossen.

Was den im Rahmen der erfindungsgemäßen Instant-Getränkezusammensetzung verwendbaren Zuckeraustauschstoff als solchen anbelangt, so ist dieser aus der Gruppe von Erythrit (Erythritol), Mannit (Mannitol), Xylit (Xylitol), Sorbit (Sorbitol), Isomaltit bzw. Isomalt, Maltit (Maltitol), Lactit (Lactitol), Galactit (Galactitol) sowie deren Mischungen und Kombinationen, bevorzugt Erythrit, Mannit, Sorbit, Xylit, Isomaltit und deren Mischungen, ausgewählt. Besonders gute Ergebnisse werden jedoch bei der Verwendung von Mannit und Sorbit und deren Mischungen, insbesondere Mannit, erzielt.

Der im Rahmen der Erfindung verwendete Begriff der Zuckeralkohole ist dabei sehr breit zu verstehen und bezieht sich insbesondere auf eine Gruppenbezeichnung für im Allgemeinen kristalline, gut wasserlösliche Polyhydroxyverbindungen (Polyole), die durch Reduktion der Carbonylfunktion aus Zuckern entstehen. Hierbei werden insbesondere Monosaccharid-Zuckeralkohole und Disaccharid-Zuckeralkohole unterschieden. Neben ihrem geringen Brennwert, welcher im Allgemeinen bei nur circa 2,4 kcal/g liegt, zeichnen sich die zur Gruppe der Zuckeraustauschstoffe gehörenden Zuckeralkohole durch ihre nichtkariogenen Eigenschaften aus. Für weitergehende Einzelheiten zu dem Begriff der Zuckeralkohole kann insbesondere verwiesen werden auf Römpp Lexikon Chemie, 10. Auflage, Georg-Thieme-Verlag, Stuttgart/New York, Band 6, 1999, Seite 5097, Stichwort: "Zuckeralkohole", und auf Römpp Lexikon Lebensmittelchemie, 1. Auflage, Georg-Thieme-Verlag, Stuttgart/New York, 1995, Seiten 1953/954, Stichwort: "Zuckeralkohole" sowie auf die dort jeweils referierte Literatur, deren jeweiliger Inhalt durch Bezugnahme eingeschlossen ist.

Was den von Saccharose verschiedenen Zucker betrifft, so ist dieser aus der Gruppe von Mannose, Maltose, Lactose, Glucose (Dextrose), Fructose, Xylose, Maltodextrin und deren Mischungen ausgewählt. Zwar weisen die zuvor genannten Zucker im Vergleich zu den Zuckeraustauschstoffen eine leicht erhöhte Kariogenität auf, gegenüber der üblicherweise verwendeten Saccharose ist die Kariogenität jedoch immer noch deutlich herabgesetzt. Weiterhin lassen sich durch die von Saccharose verschiedenen Zucker die erfindungsgemäßen Instant-Getränkezusammensetzungen hinsichtlich der geschmacklichen Eigenschaften modulieren bzw. maßschneidern, da so auch geringere Süßegrade bei gleichem Träger- bzw. Matrixvolumen erzeugt werden können. Insbesondere Personen im Erwachsenenalter empfinden auf den Geschmack von Kindern abgestimmte Instant-Getränkezusammensetzungen häufig als zu süß, was durch den erfindungsgemäßen Einsatz der zuvor genannten Zucker vermieden werden kann.

Als besonders vorteilhaft hat sich erwiesen, wenn für den von Saccharose verschiedenen Zucker Maltodextrin eingesetzt wird. Durch Maltodextrin kann die Zusammensetzung einerseits hinsichtlich ihrer organoleptischen Eigenschaften, insbesondere im Hinblick auf die Süßkraft, sowie andererseits in Bezug auf die Stabilität der Agglomerate und/oder Granulate nochmals verbessert werden. Insbesondere sind die jeweiligen Partikel bzw. Teilchen deutlich stabiler und bersten weniger schnell. Auch die Abriebfestigkeit ist deutlich erhöht, und die Handhabbarkeit des Granulier- und/oder Agglomerationsprozesses ist verbessert, insbesondere da Maltodextrin ein äußerst gutes Bindemittel zur Aufnahme weiterer Komponenten darstellt. Zudem ist es vorteilhaft, wenn der DE-Wert von Maltodextrin vorzugsweise höchstens 19, bevorzugt höchstens 12, besonders bevorzugt höchstens 6, ganz besonders bevorzugt höchstens 5, beträgt. Der DE-Wert kann als Maß dazu herangezogen werden, in welchem Abbau- bzw. Hydrolysegrad das eingesetzte Maltodextrin vorliegt. Im Allgemeinen weist ein Maltodextrin mit niedrigem DE-Wert einen höheren Anteil an Polysacchariden bzw. hochmolekularen Sacchariden und einen geringeren Anteil an niedermolekularen Sacchariden auf, während ein Maltodextrin mit hohem DE-Wert einen höheren Anteil an niedermolekularen Sacchariden und einen geringeren Anteil an Polysacchariden aufweist. Durch den geringeren Anteil niedermolekularer Saccharide bei Maltodextrin mit kleineren DE-Werten kann die Kariogenität der Zusammensetzung noch weiter verringert werden.

Zudem hat sich ebenfalls der Einsatz einer Kombination von Fructose und Glucose, insbesondere in Form von Glucosesirup und/oder Invertzucker und/oder Invertsirup, bewährt, da auf diese Weise äußerst gute und natürliche Süßungsprofile bzw. natürlicher Süßgeschmack der erfindungsgemäßen Instant-Geträmkezusammensetzung erzielt werden können. Auch besitzen Glucose- und Invertsirup aufgrund ihrer Konsistenz bzw. Klebrigkeit ausgezeichnete Eigenschaften als Bindemittel zur Aufnahme weiterer Komponenten, insbesondere des Kakaos.

Durch die gezielte Verwendung von Substanzen auf Basis von Zuckeraustauschstoffen bzw. von Saccharose verschiedenen Zuckern als Bestandteil bzw. Komponenten des isomaltulosebasierten Granulatbildners kann zudem bei Bereitstellung eines natürlichen Süßgeschmacks eine signifikante Kalorienreduktion erreicht werden.

Die vorgenannten Substanzen (d. h. Isomaltulose einerseits und Zuckeraustauschstoff bzw. von Saccharose verschiedener Zucker andererseits) bilden gewissermaßen - ohne sich auf diese Theorie beschränken zu wollen - das Grundgerüst bzw. die Matrix der in Granulat- oder Agglomeratform vorliegenden erfindungsgemäßen Instant-Getränkezusammensetzung bzw. der diesbezüglichen Teilchen und/oder Partikel, in welche der Kakao, insbesondere das Kakaopulver, und gegebenenfalls weitere Aroma- und/oder Geschmacksbildner sozusagen angelagert bzw. eingelagert bzw. inkorporiert werden können.

Im Rahmen der vorliegenden Erfindung ist es vorgesehen, dass die Zusammensetzung den Granulat- bzw. Agglomeratbildner (d. h. die Kombination von Isomaltulose einerseits und Zuckeraustauschstoff bzw. von Saccharose verschiedenem Zucker andererseits) in einer Menge von 40 bis 85 Gew.-%, bezogen auf die Zusammensetzung und/oder das Granulat bzw. Agglomerat, enthält.

Was die erfindungsgemäß eingesetzte Menge an Isomaltulose als Komponente des Granulat- bzw. Agglomeratbildners betrifft, so kann diese in weiten Bereichen variieren. Erfindungsgemäß hat es sich insbesondere bewährt, wenn die Zusammensetzung nach der Erfindung die Isomaltulose in einer Menge von 20 bis 70 Gew.-%, insbesondere 30 bis 70 Gew. %, vorzugsweise 40 bis 70 Gew.-%, besonders bevorzugt 50 bis 60 Gew.-%, bezogen auf die Zusammensetzung und/oder das Granulat bzw. Agglomerat, enthält.

Erfindungsgemäß kommt auch dem Verhältnis der dem Granulat- oder Agglomeratbildner zugrundeliegenden Komponenten zueinander, insbesondere hinsichtlich der Ausbildung stabiler und für die Aufnahme des Kakaos und gegebenenfalls der Aroma- bzw. Geschmacksbestandteile geeigneter Granulate oder Agglomerate, eine große Bedeutung zu:

So ist es erfindungsgemäß vorgesehen, dass die Zusammensetzung nach der Erfindung die Isomaltulose einerseits und den Zuckeraustauschstoff und/oder den von Saccharose verschiedenen Zucker andererseits in einem Verhältnis [Isomaltulose : (Zuckeraustauschstoff und/oder von Saccharose verschiedener Zucker)] im Bereich von 40 : 1 bis 2 : 1 enthält

Sofern eine Kombination von Zuckeraustauschstoff und von Saccharose verschiedenem Zucker eingesetzt wird, ist es erfindungsgemäß vorteilhaft, wenn die Zusammensetzung nach der Erfindung den Zuckeraustauschstoff einerseits und den von Saccharose verschiedenen Zucker andererseits in einem Verhältnis [Zuckeraustauschstoff : von Saccharose verschiedener Zucker] im Bereich von 100 : 1 bis 1 : 100, insbesondere 50 : 1 bis 1 : 50, vorzugsweise 30 : 1 bis 1 : 30, bevorzugt 20 : 1 bis 1 : 20, ganz besonders bevorzugt 10 : 1 bis 1 : 10, enthält.

Es kann also erfindungsgemäß vorgesehen sein, dass die Zusammensetzung nach der Erfindung entweder eine Kombination von Isomaltulose mit einem Zuckeraustauschstoff einerseits, welche erfindungsgemäß bevorzugt ist, oder aber eine Kombination von Isomaltulose mit einem von Saccharose verschiedenen Zucker andererseits aufweist. Darüber hinaus kann es auch vorgesehen sein, dass die Zusammensetzung nach der Erfindung eine Kombination von Isomaltulose mit einem Zuckeraustauschstoff und einem von Saccharose verschiedenen Zucker aufweist.

Als erfindungsgemäß besonders bevorzugte Ausführungsform hat sich aber bewährt, wenn als Granulat- oder Agglomeratbildner eine Kombination von Isomaltulose mit mindestens einem Zuckeraustauschstoff eingesetzt wird. Zuckeraustauschstoffe weisen im Vergleich zu den von Saccharose verschiedenen Zuckern einen noch weiter verringerten Brennwert sowie eine mit Saccharose vergleichbare Süßkraft auf, was sich insbesondere auf die Dosierbarkeit und den natürlichen Süßungsgeschmack positiv auswirkt.

Was die erfindungsgemäß eingesetzten Mengen des von Saccharose verschiedenen Zuckers und/oder des Zuckeraustauschstoffs anbelangt, so sind diese in der Zusammensetzung vorzugsweise in einer Menge von 1 bis 50 Gew.-%, insbesondere 5 bis 20 Gew.-%, vorzugsweise 10 bis 15 Gew.-%, bezogen auf die Zusammensetzung und/oder das Granulat bzw. Agglomerat, enthalten. So werden einerseits deutlich bessere organoleptische Eigenschaften erzielt; andererseits lässt sich die Verarbeitbarkeit signifikant steigern, da insbesondere bei der vorgenannten Menge eine Klumpenbildung zusätzlich verhindert wird.

Im Rahmen der vorliegenden Erfindung enthält die erfindungsgemäße Zusammensetzung - wie zuvor ausgeführt - Kakao, insbesondere Kakaopulver.

Unter dem Begriff "Kakao" versteht man ein feingemahlenes Erzeugnis, welches aus aufbereiteten Samen des Kakaobaumes gewonnen und als Grundstoff zur Herstellung von Schokolade und Schokoladenprodukten sowie Kakaogetränken verwendet wird. Nach der Ernte der Kakaosamen (Kakaobohnen) erfolgt dazu zunächst ein Fermentationsschritt, welcher für die Entfaltung des typischen Schokoladengeschmacks erforderlich ist. Im darauffolgenden Schritt werden die fermentierten Bohnen von Fremdstoffen befreit und weiter getrocknet, dass der Wassergehalt auf circa 6 Gew.-% sinkt. Fermentierte und luftgetrocknete Kakaobohnen umfassen im Allgemeinen insbesondere 54 Gew.-% Fett, 11,5 Gew.-% Protein, 9 Gew.-% Cellulose und je 6 Gew.-% Wasser, Polyphenole und Stärke, 2,6 Gew.-% Asche, je 1 bis 1,5 Gew.-% Mono- und Oligosaccharide, Pentosane, Carbonsäuren und Theobromin sowie 0,5 Gew.-% Koffein. Beim anschließenden Rösten sinkt der Wassergehalt weiter auf circa 2 Gew.-%. Zudem werden durch den Röstvorgang Essigsäure und flüchtige Ester abgetrennt, und es bilden sich sowohl das typische Kakaoaroma als auch die typische Farbe. Nach dem Abkühlen werden die gerösteten Bohnen zu Kakaobruch gebrochen und Keimlinge und Schalen entfernt. Die Kakaokerne werden im Anschluss fein zerkleinert und gemahlen, wodurch eine homogene und fließfähige Kakaomasse entsteht. Um aus der Kakaomasse Kakaopulver herzustellen, wird zunächst bei einer Temperatur von circa 80 bis 90 °C und einem Druck von bis zu 900 bar der Kakaopresskuchen hergestellt. Dabei wird das Fett herausgedrückt und fließt als Kakaobutter ab. Der ursprüngliche Fettgehalt von circa 50 Gew.-% wird so auf circa 10 bis 20 Gew.-% reduziert. Im Anschluss erfolgt eine Instantisierung des Kakaopresskuchens, um eine gute Löslichkeit bzw. Dispergierfähigkeit, insbesondere Suspensionsfähigkeit, des Kakaopulvers in trinkbaren Flüssigkeiten zu erzielen, da der Anteil echtlöslicher Teilchen beim Kakaopulver nur 6 bis 8 Gew.-% beträgt. Bei der Instantisierung wird der Kakaopresskuchen in einer Dampfphase oder in einem wässrigen Aerosolnebel oberflächlich benetzt und dadurch verklebt. Nach dem Instantisieren wird der Kakaopresskuchen in Walzenbrechern zu feinem Kakaopulver zermahlen. Das Pulver kann schließlich zur Herstellung weiterer Produkte, wie beispielsweise kakaohaltigen Instant-Zusammensetzungen, verwendet werden.

Zu weitergehenden Einzelheiten zu dem Begriff Kakao kann insbesondere verwiesen werden auf Römpp Lexikon Lebensmittelchemie, 1. Auflage, Georg-Thieme-Verlag, Stuttgart/New York, 1995, Seiten 338 bis 340, Stichwort: "Kakao", sowie die dort referierte Literatur, deren jeweiliger Inhalt durch Bezugnahme eingeschlossen ist.

Hinsichtlich der eingesetzten Menge an Kakao, insbesondere Kakaopulver, kann diese zum Erhalt eines vollmundigen Schokoladen- bzw. Kakaogeschmacks in weiten Bereichen variieren. Erfindungsgemäß ist es besonders bevorzugt, wenn die Zusammensetzung Kakao, insbesondere Kakaopulver, in einer Menge von 5 bis 70 Gew.-%, insbesondere 10 bis 50 Gew.-%, vorzugsweise 15 bis 40 Gew.-%, besonders bevorzugt 20 bis 25 Gew.-%, bezogen auf die Zusammensetzung und/oder das Granulat bzw. Agglomerat, enthält.

Was den erfindungsgemäß optional eingesetzten Aroma- und/oder Geschmacksbildner betrifft, so kann dieser in einer Vielzahl von Formen vorliegen und in variablen Mengen eingesetzt werden, um ein breite Palette sowohl an Geschmacksrichtungen als auch an Geschmacksintensitäten zu erreichen.

So kann die Zusammensetzung nach der Erfindung den mindestens einen Aroma- und/oder Geschmacksbildner in einer Menge von 0,01 bis 50 Gew.-%, insbesondere 0,1 bis 25 Gew.-%, besonders bevorzugt 0,5 bis 20 Gew.-%, ganz besonders bevorzugt 1 bis 10 Gew.-%, bezogen auf die Zusammensetzung und/oder das Granulat bzw. Agglomerat, enthalten.

Erfindungsgemäß kann es vorgesehen sein, dass der mindestens eine Aroma- und/oder Geschmacksbildner aus der Gruppe von künstlichen Aromen und/oder Aromastoffen, naturidentischen Aromen und/oder Aromastoffen, natürlichen Aromen und/oder Aromastoffen, vorzugsweise Vanillin, ausgewählt ist. Durch den Einsatz von Aromen bzw. Aromastoffen kann die Geschmacksrichtung noch weiter intensiviert oder können verschiedene Geschmacksrichtungen besser kombiniert werden. Besonders harmonische Geschmacksrichtungen können dabei durch den Einsatz von Vanillin erreicht werden.

Erfindungsgemäß ist es gleichermaßen möglich, dass der mindestens eine Aroma- und/oder Geschmacksbildner ausgewählt ist aus der Gruppe von Vitaminen, Spurenelementen und Mineralstoffen sowie deren Mischungen. Durch den Zusatz der oben genannten Substanzen ist es möglich, die Zusammensetzung in gesundheitsfördernder Art und Weise zu modifizieren bzw. ernährungsphysiologisch zu optimieren.

Insbesondere lässt sich die Zusammensetzung durch den Einsatz von Vitaminen, Spurenelementen und/oder Mineralstoffen hinsichtlich der empfohlenen Tagesdosen der oben genannten Substanzen in gesundheitsfördernder Art und Weise modifizieren.

In Bezug auf die erfindungsgemäße Zusammensetzung können die zuvor genannten Aroma- und/oder Geschmacksbildner auch kombiniert werden, so dass insgesamt eine individuelle Geschmacksgebung und -intensität vorgenommen werden kann.

Zudem ist es erfindungsgemäß vorgesehen, dass die Zusammensetzung mindestens einen lebensmittelkompatiblen Emulgator insbesondere zur Dispergierung, vorzugsweise zur Ausbildung einer Suspension, sowie Stabilisierung der Instant-Getränkezusammensetzug in der trinkbaren Flüssigkeit enthält. Insbesondere ist es dadurch möglich, die Zusammensetzung in einfacher Weise und mit verringerter Klumpenbildung auch in kalter Milch zu lösen, was ansonsten ein häufig auftretendes Problem bei Kakao-Instantgetränken darstellt. Weiterhin wird so eine Phasentrennung von kakaohaltiger Komponente und trinkbarer Flüssigkeit, insbesondere Milch, bei längeren Standzeiten verhindert bzw. vermindert.

Was die eingesetzte Menge des lebensmittelkompatiblen Emulgators anbelangt, so variiert diese im Bereich von 0,5 bis 1,5 Gew.-%, bezogen auf die Zusammensetzung und/oder das Granulat und/oder Agglomerat.

Erfindungsgemäß ist der lebensmittelkompatible Emulgator aus der Gruppe von Lecithinen, Monoglyceriden, insbesondere Monoglyceriden von Speisefettsäuren, Diglyceriden, insbesondere Diglyceriden von Speisefettsäuren, und deren Mischungen, ausgewählt. Bevorzugterweise wird Sojalecithin als Emulgator eingesetzt.

Insbesondere kann es im Rahmen der vorliegenden Erfindung auch vorgesehen sein, dass (b) der Kakao, insbesondere das Kakaopulver, mit dem Emulgator angereichert bzw. versetzt ist, was insbesondere positiv im Hinblick auf das Löslichkeits- bzw. Suspensionsverhalten der Kakaopartikel in der trinkbaren Flüssigkeit ist.

Um den Süßegrad weiterhin modulieren zu können, kann es erfindungsgemäß vorgesehen sein, dass die Zusammensetzung mindestens einen Süßstoff, insbesondere in einer Menge von 0,01 bis 5 Gew.-%, insbesondere 0,05 bis 2 Gew.-%, vorzugsweise 0,1 bis 1 Gew.-%, bezogen auf die Zusammensetzung und/oder das Granulat bzw. Agglomerat, enthält.

Dabei kann der Süßstoff insbesondere aus der Gruppe von Acesulfam, Aspartam, Aspartam-Acesulfam, Cyclamat, Saccharin, Sucralose, Thaumatin, Neophesperidin, Neotam, Alitam, Brazzein, Hernandulcin, Lugdunam, Monellin, Pentadin und Steviosid sowie deren Mischungen, insbesondere Aspartam, Cyclamat, Saccharin, Sucralose und Steviosid sowie deren Mischungen, bevorzugt Sucralose, ausgewählt sein.

Im Unterschied zu Zuckeraustauschstoffen versteht man unter Süßstoffen Verbindungen synthetischer oder natürlicher Herkunft, die keinen oder im Verhältnis zur Süßkraft einen vernachlässigbaren physiologischen Brennwert besitzen, weswegen sie im Englischen aus als *"non-nutritive sweeteners"* bezeichnet werden, und eine um ein Vielfaches höhere Süßkraft als Saccharose aufweisen, wobei die Süßkraft einer Verbindung durch die Verdünnung gegeben ist, bei der sie ebenso süß wie eine Saccharoselösung schmeckt (isosüße Lösung). Für weitergehende Einzelheiten zu dem Begriff der Süßstoffe kann insbesondere verwiesen werden auf Römpp Chemielexikon, 10. Auflage, Georg-Thieme-Verlag, Stuttgart/New York, Band 5, 1998, Seiten 4302 bis 4304, Stichwort: "Süßstoffe", sowie die dort referierte Literatur, deren jeweiliger Inhalt hiermit durch Bezugnahme eingeschlossen ist.

Auch kann es vorgesehen sein, dass die erfindungsgemäße Zusammensetzung Farbstoffe, insbesondere natürliche und/oder naturidentische Farbstoffe, enthält. Vorzugsweise beträgt die eingesetzte Menge der Farbstoffe 0,01 bis 5 Gew.-%, bevorzugt 0,1 bis 4 Gew.-%, ganz besonders bevorzugt 0,5 bis 3 Gew.-%, bezogen auf die Zusammensetzung und/oder das Granulat bzw. Agglomerat.

Die erfindungsgemäße Zusammensetzung bzw. das Granulat bzw. Agglomerat zeichnet sich insbesondere dadurch aus, dass es gelungen ist, eine Instant-Getränkezusammensetzung bereitzustellen, welche zumindest im Wesentlichen frei ist von Saccharose und trotzdem sowohl eine hervorragende Süße - bei nichtkariogenen Eigenschaften - aufweist als auch in Form stabiler und staubfreier, gut zu dosierender Granulate oder Agglomerate vorliegt. Dies wird im Rahmen der vorliegenden Erfindung durch den gezielten Einsatz von Isomaltulose in Kombination mit Zuckeraustauschstoffen und/oder von Saccharose verschiedenen Zuckern als Granulat- oder Agglomeratbildner erreicht.

Allenfalls kann es erfindungsgemäß in Frage kommen, dass die erfindungsgemäße Zusammensetzung Saccharose in geringen Mengen enthält, wodurch die positiven Eigenschaften der erfindungsgemäßen Zusammensetzung zumindest im Wesentlichen nicht nachteilig beeinflusst werden. Im Falle eines Auftretens von Saccharose in der Zusammensetzung handelt es sich dabei meist um Verunreinigungen, welche im Rahmen des Herstellungsprozesses entstanden sind. So kann die Zusammensetzung Saccharose in einer Menge von höchstens 2 Gew.-%, insbesondere höchstens 1 Gew.-%, vorzugsweise höchstens 0,5 Gew.-%, besonders bevorzugt höchstens 0,1 Gew.-%, ganz besonders bevorzugt jedoch 0 Gew.-%, bezogen auf die Zusammensetzung und/oder das Granulat bzw. Agglomerat, enthalten. Erfindungsgemäß ist es somit ganz besonders bevorzugt, dass die Zusammensetzung nach der Erfindung keine Saccharose enthält bzw. frei von Saccharose ist.

Was die erfindungsgemäße Instant-Getränkezusammensetzung weiterhin anbelangt, so kann es vorgesehen sein, dass diese in Form eines kornförmigen und/oder zumindest im Wesentlichen kugelförmigen, insbesondere kornförmigen Granulats oder Agglomerats vorliegt. Dabei ist es erfindungsgemäß gleichermaßen möglich, dass die Granulate oder Agglomerate porös ausgebildet sind. Es ist allerdings auch denkbar, dass die Granulate oder Agglomerate unregelmäßig geformt sind oder aber beispielsweise zylinderförmig, würstchenförmig (Würstchengranulat) oder kegelförmig geformt sind.

Die Teilchen bzw. Partikel der erfindungsgemäßen Zusammensetzung weisen zudem eine hohe Stabilität bzw. mechanische Festigkeit auf, was auch einer unerwünschten Staubbildung entgegenwirkt. So weisen die Teilchen und/oder Partikel der erfindungsgemäßen Zusammensetzung, insbesondere des Granulats bzw. Agglomerats, eine Druck- bzw. Berstfestigkeit (Gewichtsbelastbarkeit pro Teilchen bzw. Partikel) von mindestens 0,01 N, insbesondere mindestens 0,05 N, vorzugsweise mindestens 0,1 N, bevorzugt mindestens 0,5 N, besonders bevorzugt mindestens 1 N, auf. In diesem Zusammenhang können die Teilchen und/oder Partikel der Zusammensetzung, insbesondere des Granulats bzw. Agglomerats, eine Druck- bzw. Berstfestigkeit (Gewichtsbelastbarkeit pro Teilchen bzw. Partikel) im Bereich von 0,01 N bis 10 N, insbesondere 0,05 N bis 5 N, vorzugsweise 0,1 N bis 3 N, bevorzugt 0,2 N bis 2,5 N, besonders bevorzugt 0,5 N bis 2 N, aufweisen.

Um das Lösungsverhalten sowie die Dosierungseigenschaften weiter zu optimieren, kann eine definierte Einstellung der Teilchen- bzw. Partikelgröße erfolgen. Eine Einstellung der Partikel- bzw. Teilchengrößen erfolgt dabei insbesondere über die Granulier- bzw. Agglomerierbedingungen, was dem Fachmann als solches bekannt ist. Zudem kann eine nachfolgende Einstellung bzw. Anpassung mittels Sieben oder gegebenenfalls Brechen oder Zerkleinern bzw. Klassieren erfolgen. Die Bestimmung der Partikel- bzw. Teilchengrößen kann ebenfalls durch dem Fachmann an sich bekannte Methoden erfolgen, z. B. durch Siebanalyse, granulometrisch, durch Lichtbeugung oder durch mikroskopische Verfahren.

Bevorzugterweise sollte die Teilchengröße der Partikel (Partikelgröße) der erfindungsgemäßen Zusammensetzung, insbesondere des Granulats oder Agglomerats, bezogen auf mindestens eine Raumrichtung, 0,01 bis 10 mm, insbesondere 0,02 bis 5 mm, vorzugsweise 0,1 bis 3 mm, betragen. Der Größenbezug "auf mindestens eine Raumrichtung" ist dahingehend zu verstehen, dass die Partikel in mindestens eine Raumrichtung eine Ausdehnung im oben definierten Bereich aufweisen, da die Partikel ein asymmetrisches Erscheinungsbild besitzen können, wie beispielsweise eine zylindrische oder würstchenartige Form.

In diesem Zusammenhang kann es zudem vorgesehen sein, dass die mittlere Teilchengröße (mittlere Partikelgröße), insbesondere die mittlere Teilchengröße D₅₀, der Partikel der Zusammensetzung, insbesondere des Granulats bzw. Agglomerats, im Bereich von 0,05 bis 8 mm, insbesondere 0,1 bis 4 mm, vorzugsweise 0,2 bis 3 mm, liegt.

Darüber hinaus ist es vorgesehen, dass die Zusammensetzung nach der Erfindung, insbesondere das Granulat oder Agglomerat, eine diskrete Teilchengrößenverteilung aufweist; dabei weisen mindestens 90 % der Partikel eine Partikelgröße von 0,02 bis 5 mm, vorzugsweise 95 % der Partikel eine Partikelgröße von 0,1 bis 3 mm, auf.

Aufgrund der spezifischen und zuvor definierten Beschaffenheit der einzelnen Partikel des Granulats oder Agglomerats wird gewährleistet, dass die erfindungsgemäße kakaohaltige Instant-Getränkezusammensetzung ein gutes Löslichkeitsverhalten aufweist und zudem beim Einrühren in eine Trinkflüssigkeit nicht klumpt. Weiterhin entstehen so keine Stäube, was insbesondere die Dosierungseigenschaften verbessert und Verluste beim Dosieren minimiert bzw. die Handhabung erleichtert.

Die erfindungsgemäße Instant-Getränkezusammensetzung zeichnet sich zudem durch eine spezielle Schüttdichte aus. So kann das Granulat oder Agglomerat eine Schüttdichte von 100 bis 800 g/l, insbesondere 300 bis 600 g/l, vorzugsweise 400 bis 450 g/l, aufweisen.

Durch die spezifische Schüttdichte der erfindungsgemäßen Instant-Getränkezusammensetzung liegt ein gewichtsbezogen hoher Volumenanteil vor, was insbesondere eine gute Abfüllbarkeit im Produktionsprozess ermöglicht. Weiterhin führt dies unter anderem dazu, dass die Dosierfähigkeit, insbesondere die Löffeldosierbarkeit, der erfindungsgemäßen Instant-Getränkezusammensetzung bei der Zubereitung des betreffenden Instant-Getränks mit einer Trinkflüssigkeit weiter verbessert wird. Zudem wird der massenbezogene Anteil an für die Aufbereitung des Instant-Getränks benötigter Instant-Getränkezusammensetzung reduziert.

Unter dem Begriff der "Schüttdichte" ist im Allgemeinen der Quotient aus der Masse und dem eingenommenen Volumen, das Zwischenräume und, falls zusätzlich vorhanden, auch Hohlräume (z. B. Poren) einschließt, zu verstehen. Zur Bestimmung der Schüttdichte von Pulver bzw. Granulat bzw. Agglomerat kann auf die DIN ISO 607:1984-01 verwiesen werden. Die Schüttdichte kann bestimmt werden, indem man beispielsweise die betreffende Zusammensetzung in einen Messkasten, Messbecher, Messzylinder oder dergleichen schüttet und das Gewicht feststellt. Höher als die Schüttdichte, deren Reziprokes das Schüttvolumen ist, liegt die sogenannte Rütteldichte und erst recht die sogenannte Stampfdichte. Für weitergehende Einzelheiten zum Begriff der Schüttdichte kann insbesondere verwiesen werden auf Römpp Chemielexikon, 10. Auflage, Georg-Thieme-Verlag, Stuttgart/New York, Band 5, 1998, Seite 3990, Stichwort: "Schüttdichte".

Das in der erfindungsgemäßen Instant-Getränkezusammensetzung eingesetzte Granulat bzw. Agglomerat besitzt zudem einen gewissen Feuchtegehalt (Restfeuchte). So weist die erfindungsgemäße Instant-Getränkezusammensetzung bzw. das Granulat oder Agglomerat, bezogen auf die Zusammensetzung und/oder das Granulat oder Agglomerat, eine Gesamtrestfeuchte 1 bis 5 Gew.-%, besonders bevorzugt 2 bis 4 Gew.-%, auf. Der maximale Gesamtrestfeuchtegehalt sollte in diesem Zusammenhang 5 Gew.-%, besonders bevorzugt 4 Gew.-%, bezogen auf die Zusammensetzung bzw. das Granulat oder Agglomerat, nicht überschreiten. Die Einstellung des Feuchtigkeitsgehaltes bzw. der Gesamtrestfeuchte in dem Granulat bzw. Agglomerat dient einerseits der Erhöhung der Stabilität, insbesondere der Lagerungs- und Alterungsbeständigkeit, und zum anderen der Verbesserung der Verklumpungseigenschaften. In diesem Zusammenhang bezieht sich der Begriff "Gesamtrestfeuchte", wie er im Rahmen der vorliegenden Erfindung verwendet wird, auf den Gesamtfeuchtegehalt der erfindungsgemäßen Zusammensetzung bzw. des Granulats oder Agglomerats und umfasst somit sowohl z. B. herstellungsbedingt zugegebene Feuchtigkeit, beispielsweise in Form von Wasser, als auch bereits in den Komponenten inhärent vorhandene Feuchtigkeit, wie beispielsweise Kristallwasser oder dergleichen.

Die erfindungsgemäße Instant-Getränkezusammensetzung sollte in Wasser und wässrigen Medien, insbesondere Milch, zumindest im Wesentlichen, insbesondere vollständig, löslich und/oder suspendierbar sein, um auf einfache Weise ein Instant-Getränk herzustellen, das auch bei längeren Standzeiten zumindest im Wesentlichen nicht zur Bildung eines Bodensatzes oder einer Phasentrennung zwischen fetthaltiger Kakaokomponente und dem jeweiligen Medium neigt.

Zudem ist es im Rahmen der vorliegenden Erfindung von Vorteil, wenn die erfindungsgemäße Instant-Getränkezusammensetzung zumindest im Wesentlichen, vorzugsweise vollständig, aus dem Granulat oder Agglomerat besteht. In diesem Zusammenhang kann das Granulat oder Agglomerat insbesondere kornförmige, aber auch andersartige, wie beispielsweise würstchenförmige, stäbchenförmige oder zylinderförmige, Teilchen sowie deren Mischungen aufweisen. Insgesamt sollte der Staubanteil bzw. der Anteil sehr kleiner Partikel mit deutlich unterhalb der zuvor für die Granulate oder Agglomerate angegebenen Größe möglichst gering sein, um das Staub- und Verklumpungsverhalten der erfindungsgemäßen Zusammensetzung weiter zu verbessern.

Zusammenfassend weist die erfindungsgemäße Instant-Getränkezusammensetzung aufgrund ihres Vorliegens in Form von speziellen Granulaten oder Agglomeraten eine verbesserte Löslichkeit in der Trinkflüssigkeit auf. Aufgrund der definierten Größe der Granulate oder Agglomerate ist die Neigung zur Klumpenbildung sowohl bei Lagerung als auch bei Aufbereitung des Instant-Getränks deutlich reduziert. Auch optisch wird insbesondere durch die diskrete Teilchengrößenverteilung ein ansprechendes Aussehen der erfindungsgemäßen Instant-Getränkezusammensetzung erzielt. Bei der Handhabung, insbesondere sowohl bei der Verpackung als auch bei der Verwendung durch den Verbraucher, neigt die erfindungsgemäße kakaohaltige Instant-Getränkezusammensetzung nicht zur Staubbildung.

Weiter zusammenfassend zeichnet sich die erfindungsgemäße Instant-Getränkezusammensetzung insgesamt durch ihre nichtkariogenen Eigenschaften einerseits sowie einen geringen Brennwert andererseits aus, was insbesondere aus dem Einsatz eines speziellen Granulat- bzw. Agglomeratbildners auf Basis von Isomaltulose in Kombination mit mindestens einem Zuckeraustauschstoff und/oder mindestens einem von Saccharose verschiedenen Zucker resultiert. Aufgrund der gegenüber den im Stand der Technik bekannten Instant-Getränkezusammensetzungen deutlich verringerten Kariogenität sowie des verringerten Brennwerts ist die erfindungsgemäße Instant-Getränkezusammensetzung sowohl zahnmedizinisch als auch ernährungsphysiologisch verbessert.

Weiterer Gegenstand der vorliegenden Erfindung - gemäß einem **zweiten** Aspekt - ist ein Verfahren zur Herstellung einer kakaohaltigen Instant-Getränkezusammensetzung, insbesondere zur Herstellung eines vorzugsweise nichtkariogenen und/oder kalorienreduzierten kakaohaltigen Instant-Getränks durch Aufbereiten mit einer trinkbaren Flüssigkeit, in Form eines Granulats oder Agglomerats, insbesondere wie zuvor definiert, wobei das Verfahren die folgenden Verfahrensschritte umfasst:
a) Herstellung einer Mischung, welche (a) mindestens einen Granulat- oder Agglomeratbildner auf Basis einer Kombination von Isomaltulose mit mindestens einem von Saccharose verschiedenen Zucker und/oder mit mindestens einem Zuckeraustauschstoff in einem Verhältnis [Isomaltulose : (Zuckeraustauschstoff und/oder von Saccharose verschiedener Zucker)] im Bereich von 40 : 1 bis 2 : 1 und (b) Kakao, insbesondere Kakaopulver, (c) gegebenenfalls mindestens einen Aroma- und/oder Geschmacksbildner sowie (d) mindestens einen lebensmittelkompatiblen Emulgator enthält;
b) nachfolgende Herstellung eines Granulats oder Agglomerats aus der in Schritt a) hergestellten Mischung durch Trocknung unter Einstellung einer Druckfestigkeit, berechnet als Gewichtsbelastbarkeit pro Partikel, von mindestens 0,01 N, einer Gesamtrestfeuchte von 1 bis 5 Gew.-%, bezogen auf das Granulat oder Agglomerat, und einer diskreten Teilchengrößenverteilung, wobei 90 % der Partikel eine Partikelgröße, bezogen auf mindestens eine Raumrichtung, von 0,02 bis 5 mm aufweisen,
wobei der Zuckeraustauschstoff ausgewählt ist aus der Gruppe von Erythrit, Mannit, Xylit, Sorbit, Isomaltit, Maltit, Lactit, Galactit und deren Mischungen, und/oder wobei der von Saccharose verschiedene Zucker ausgewählt ist aus der Gruppe von Mannose, Maltose, Glucose, Fructose, Lactose, Xylose, Maltodextrin und deren Mischungen und
wobei der lebensmittelkompatible Emulgator ausgewählt ist aus der Gruppe von Lecithinen, Monoglyceriden, insbesondere Monoglyceriden von Speisefettsäuren, Diglyceriden, insbesondere Diglyceriden von Speisefettsäuren, und deren Mischungen.

Was den erfindungsgemäßen Schritt a) betrifft, so kann es vorgesehen sein, dass die Mischung durch Zugabe, insbesondere Einmischen, von Wasser angefeuchtet wird.

Das Anfeuchten ist aber nicht auf die Zugabe von Wasser beschränkt: In diesem Zusammenhang kann es erfindungsgemäß gleichermaßen vorgesehen sein, dass in Schritt a) die Mischung durch Zugabe, insbesondere Einmischen, von flüssigen Komponenten angefeuchtet wird. Auf diese Weise kann neben dem Anfeuchten gleichermaßen eine Aromatisierung der erfindungsgemäßen Instant-Getränkezusammensetzung erreicht werden.

Durch das Anfeuchten in Schritt a) sollte die Mischung auf einen Gesamtfeuchtegehalt von 0,25 bis 15 Gew.-%, insbesondere 0,5 bis 10 Gew.-%, vorzugsweise 1 bis 5 Gew.-%, bezogen auf die Mischung, eingestellt werden. Auf diese Weise wird gewissermaßen die Konsistenz der der erfindungsgemäßen Instant-Getränkezusammensetzung zugrundeliegenden Mischung vorgegeben, so dass auf diese Weise die nachfolgende Granulierung oder Agglomerierung sozusagen optimiert wird.

Was die eigentliche Herstellung des Granulats bzw. Agglomerats angeht, so erfolgt diese erfindungsgemäß in einem Schritt b) aus der in Schritt a) hergestellten Mischung in üblichen und dem Fachmann wohlbekannten Granulatoren und/oder Granuliervorrichtungen bzw. Agglomeriervorrichtungen.

Insbesondere kann Schritt b) des erfindungsgemäßen Verfahrens mittels Wirbelschichtgranulierung, Trockengranulierung, Trommelgranuliening, Feuchtgranulierung, Spruhgranulierung, Extrusion oder Agglomeration erfolgen.

Eine Granulierung bzw. Agglomerierung mit Hilfe der zuvor genannten Granulierungs- bzw. Agglomerierungsverfahren eignet sich insbesondere zur Immobilisierung bzw. Inkorporierung bzw. zum Aufbringen des Kakaos sowie gegebenenfalls weiterer Aroma- und/oder Geschmacksbildner an dem Granulat- bzw. Agglomeratbildner oder dem Träger- bzw. Matrixmaterial, da sich auf diese Weise Parameter, wie beispielsweise Teilchengröße oder Schüttdichte, besonders gut einstellen lassen. Weiterhin handelt es sich hierbei um äußerst effiziente sowie leicht zu handhabende Verfahren, welche dem Fachmann als solche bekannt sind. Durch die Technik des Granulierens bzw. Agglomerierens werden Teilchen bzw. Partikel erhalten, welche sich besonders gut im weiteren Herstellungsverfahren verarbeiten lassen.

Gemäß einer besonders bevorzugten Ausführungsform von Schritt b) kann die Granulierung bzw. Agglomerierung unter Eintrag hoher Scherkräfte erfolgen. Der Einsatz hoher Scherkräfte ermöglicht insbesondere eine gute Verarbeitbarkeit der Isomaltulose zu Granulaten oder Agglomeraten und zu einem besonders effizienten Auf- bzw. Einbringen des Aroma- und/oder Geschmacksbildners an bzw. in den Granulat- bzw. Agglomeratbildner. Weiterhin führt der Einsatz hoher Scherkräfte bei der Herstellung der erfindungsgemäßen Granulate oder Agglomerate - insbesondere im Hinblick auf die spezielle Verwendung von Isomaltulose als granulat- bzw. agglomeratbildender Komponente - zu besonders definierten Partikelstrukturen und -größen der resultierenden Granulate oder Agglomerate. Insbesondere resultieren Granulate oder Agglomerate mit minimiertem Verklumpungsverhalten, welche zudem einerseits (lager-)stabil sind und andererseits dennoch ein ausgezeichnetes Lösungsverhalten aufweisen.

Was die Herstellung der Mischung in Schritt a) bzw. die Granulierung und/oder Agglomerierung in Schritt b) des erfindungsgemäßen Verfahrens anbelangt, so sollte diesbezüglich insbesondere bei Raumtemperatur, insbesondere bei etwa 20 °C, und/oder bei Umgebungsdruck, insbesondere bei einem Druck von etwa 1.013 hPa, verfahren werden.

Zudem kann es bei dem erfindungsgemäßen Verfahren vorgesehen sein, dass sich an die Schritte a) bzw. b) eine Trocknung und/oder Einstellung auf einen vorgegebenen Restfeuchtegehalt anschließt.

In diesem Zusammenhang ist es vorgesehen, dass das Granulat oder Agglomerat auf eine Gesamtrestfeuchte von 1 bis 5 Gew.-%, besonders bevorzugt 2 bis 4 Gew.-%, bezogen auf das Granulat oder Agglomerat, eingestellt wird. Auch hier bezieht sich die Restfeuchte auf die Gesamtmenge an zugegebener Feuchtigkeit und inhärenter Feuchtigkeit, wie Kristallwasser.

Im Rahmen des erfindungsgemäßen Verfahrens kann das erfindungsgemäße Granulat oder Agglomerat auf eine Schüttdichte von 100 bis 800 g/l, insbesondere 300 bis 600 g/l, vorzugsweise 400 bis 450 g/l, eingestellt werden.

In diesem Zusammenhang kann es auch vorgesehen sein, dass die Trocknung des Granulats oder Agglomerats kontinuierlich, insbesondere in einem Wirbelstromtrockner, erfolgt.

Gleichermaßen ist es aber auch möglich, dass die Trocknung des Granulats oder Agglomerats diskontinuierlich bzw. batchweise, insbesondere in einem Wirbelschichttrockner, erfolgt. Gleichermaßen ist auch eine Trocknung durch Mikrowellenbestrahlung oder unter Verwendung eines Bandtrockners möglich.

Was die im Rahmen des erfindungsgemäßen Verfahrens vorgesehene Trocknung des erhaltenen Granulats oder Agglomerats weiterhin anbelangt, so kann auch diese bei Raumtemperatur (etwa 20 °C) und einem Druck von etwa 1013 hPa erfolgen. Gleichermaßen ist es jedoch auch möglich, dass die Trocknung des Granulats oder Agglomerats bei einer Temperatur von 30 bis 130 °C, insbesondere 40 bis 100 °C, vorzugsweise 70 bis 80 °C, durchgeführt wird. Weiterhin kann es im Rahmen des erfindungsgemäßen Verfahrens vorgesehen sein, dass die Trocknung des Granulats oder Agglomerats unter vermindertem Druck, insbesondere unter Vakuum, durchgeführt wird.

Nach erfolgter Trocknung kann das getrocknete Granulat oder Agglomerat insbesondere in einer Abkühlvorrichtung und/oder Abkühlzone abgekühlt werden, vorzugsweise auf eine Temperatur von 10 bis 20 °C.

Weiterhin kann es im Rahmen des erfindungsgemäßen Verfahrens vorgesehen sein, dass sich der Trocknung ein Verfahrensschritt des Klassierens anschließt, insbesondere mittels Sieben. Dabei ist es insbesondere möglich, dass das Granulat oder Agglomerat auf eine definierte Teilchengröße der Partikel (Partikelgröße) der Zusammensetzung, insbesondere des Granulats oder Agglomerats, bezogen auf mindestens eine Raumrichtung, 0,01 bis 10 mm, insbesondere 0,02 bis 5 mm, vorzugsweise 0,1 bis 3 mm, eingestellt wird. Die Einstellung der Teilchengröße auf einen definierten Bereich verbessert insbesondere die Dosiereigenschaften, da das Granulat bzw. Agglomerat so rieselfähig ist, aber die Bildung von Stäuben vermieden wird.

In diesem Zusammenhang kann es weiterhin vorgesehen sein, dass das Granulat oder Agglomerat durch den Schritt des Klassierens auf eine mittlere Teilchengröße (mittlere Partikelgröße), insbesondere mittlere Teilchengröße D₅₀, der Partikel der Zusammensetzung, insbesondere des Granulats oder Agglomerats, bezogen auf mindestens eine Raumrichtung, 0,05 bis 8 mm, insbesondere 0,1 bis 4 mm, vorzugsweise 0,2 bis 3 mm, eingestellt wird.

Zudem kann es vorgesehen sein, dass im Rahmen des erfindungsgemäßen Verfahrens eine Einstellung einer diskreten Teilchengrößenverteilung erfolgt; dabei weisen mindestens 90 % der Partikel eine Partikelgröße von 0,02 bis 5 mm, vorzugsweise 95 % der Partikel eine Partikelgröße von 0,1 bis 3 mm, auf.

Weiterer Gegenstand der vorliegenden Erfindung - gemäß einem **dritten** Aspekt - ist eine Instant-Getränkezusammensetzung, insbesondere wie zuvor definiert, welche sich zur Herstellung eines vorzugsweise nichtkariogenen und/oder kalorienreduzierten kakaohaltigen Instant-Getränks durch Aufbereiten mit einer trinkbaren Flüssigkeit, insbesondere Wasser oder einem wässrigen Medium, vorzugsweise Milch, eignet, wobei die erfindungsgemäße Instant-Getränkezusammensetzung durch ein wie zuvor definiertes Verfahren erhältlich ist.

Zudem ist weiterer Gegenstand der vorliegenden Erfindung - gemäß einem **vierten** Aspekt der vorliegenden Erfindung - die Verwendung einer wie zuvor definierten Instant-Getränkezusammensetzung zur Herstellung eines vorzugsweise nichtkariogenen und/oder kalorienreduzierten kakaohaltigen Instant-Getränks.

Diesbezüglich kann es erfindungsgemäß vorgesehen sein, dass die Herstellung des trinkfertigen Instant-Getränks durch Aufbereiten mit einer trinkbaren Flüssigkeit, insbesondere Milch, erfolgt. Vorzugsweise werden dabei 1 bis 15 g, bevorzugt 2 bis 10 g, besonders bevorzugt 3 bis 9 g, ganz besonders bevorzugt 4 bis 8 g, der Zusammensetzung auf 100 ml Flüssigkeit eingesetzt.

Die erfindungsgemäße Instant-Getränkezusammensetzung kann somit insbesondere zur Herstellung eines nichtkariogenen und/oder kalorienreduzierten kakaohaltigen Instant-Getränks verwendet werden.

Im Rahmen der vorliegenden Erfindung ist es insgesamt gelungen, durch eine spezielle Kombination von Granulat- bzw. Agglomeratbildnern bzw. Trägeroder Matrixmaterialien eine nichtkariogene und/oder kalorienreduzierte kakaohaltige Instant-Getränkezusammensetzung nach der vorliegenden Erfindung bzw. ein nichtkariogenes und/oder kalorienreduziertes kakaohaltiges Granulat oder Agglomerat zum anschließenden Zubereiten eines Instant-Getränks bereitzustellen. Bei den mit der erfindungsgemäßen Instant-Getränkezusammensetzung hergestellten Getränken handelt es sich um Kakaogetränke.

Weitere Ausgestaltungen, Abwandlungen und Variationen sowie Vorteile der vorliegenden Erfindung sind für den Fachmann beim Lesen der Beschreibung ohne weiteres erkennbar und realisierbar, ohne dass er dabei den Rahmen der vorliegenden Erfindung verlässt.

Die vorliegende Erfindung wird anhand der vorliegenden Ausführungsbeispiele veranschaulicht, welche die vorliegende Erfindung jedoch nicht beschränken.

### Ausführungsbeispiele:

### Beispiel 1: Rezepturbeispiel für eine nichterfindungsgemäße Instant-Getränkezusammensetzung zur Herstellung eines nichtkariogenen und kalorienreduzierten Kakaogetränks

Es wurde eine Ausgangsmischung auf Basis der folgenden Bestandteile bzw. Inhaltsstoffe herstellt:

| | | |
|---|---|---|
| Isomaltulose | 70 - 90 | Gewichtsteile |
| Kakaopulver | 20 - 25 | Gewichtsteile |
| Aroma (Vanillin) | 0,5 - 2 | Gewichtsteile |
| Sojalecithin | 0,5 - 1,5 | Gewichtsteile |
| Aspartam | 0,01 - 0,5 | Gewichtsteile |

Die zuvor beschriebene Mischung wurde zunächst unter Zugabe von Wasser auf einen Gesamtfeuchtegehalt von 5 Gew.-% eingestellt und anschließend mit an sich bekannten Agglomerationsmethoden verarbeitet, um ein kornförmiges Agglomerat mit Teilchengrößen im Bereich von 0,1 bis 3 mm und mit einem Restfeuchtegehalt von 3 bis 4 Gew.-%, bezogen auf das Agglomerat, herzustellen. Ein Auf- bzw. Einbringen der Einzelkomponenten an bzw. in den Agglomeratbildner bzw. das Matrix- bzw. Trägermaterial war jedoch kaum möglich. Anstelle von Agglomeraten mit den gewünschten Eigenschaften resultierte ein instabiles Agglomerat, welches bereits unter geringer mechanischer Einwirkung (z. B. Rühren in einem Mischer, Abfüllen in einer automatisierten Abfüllanlage oder dergleichen) zu einem feinteiligen pulverförmigen Produkt zerfiel. Weiterhin ließ sich das Erzeugnis nur unter übermäßiger Staubbildung weiterverarbeiten bzw. abfüllen, was auf die Zerstörung des Agglomerats zurückzuführen ist. Auch das Dosierverhalten bei Herstellung eines Instant-Getränkes ist mit Nachteilen verbunden und führt insbesondere zu einer partiellen Zerstörung des Agglomerats, zumal das Einbringen bzw. ein homogenes Einrühren bzw. Auflösen in Milch aufgrund der Bildung starker Verklumpungen kaum möglich war.

Im Ergebnis lassen sich unter Verwendung von Isomaltulose als einzigem Agglomeratbildner keine stabilen und gut handhabbaren Agglomerate herstellen. Auch die organoleptischen Eigenschaften waren nicht optimal, insbesondere auch aufgrund eines artifiziellen Beigeschmacks bei der Verkostung.

### Beispiel 2: Rezepturbeispiel für eine erfindungsgemäße Instant-Getränkezusammensetzung zur Herstellung eines nichtkariogenen und kalorienreduzierten Kakaogetränks

Es wurde eine Ausgangsmischung auf Basis der folgenden Bestandteile bzw. Inhaltsstoffe herstellt. Gegenüber der Rezeptur gemäß Beispiel 1 wurde ein Teil der Isomaltulose durch den von Saccharose verschiedenen Zucker Maltodextrin ersetzt (d. h. mit anderen Worten wird ein Agglomeratbildner auf Basis einer Kombination von Isomaltulose / von Saccharose verschiedenem Zucker (Maltodextrin) eingesetzt). Zudem konnte aufgrund dieser Kombination auf eine zusätzliche Süßstoffkomponente (Aspartam) verzichtet werden:

| | | |
|---|---|---|
| Isomaltulose | 55 - 75 | Gewichtsteile |
| Maltodextrin | 5 - 20 | Gewichtsteile |
| Kakaopulver | 20 - 25 | Gewichtsteile |
| Sojalecithin | 0,5 - 1,5 | Gewichtsteile |
| Aroma (Vanillin) | 0,5 - 2 | Gewichtsteile |

Bei der Herstellung des Agglomerats wurde entsprechend dem vorangehenden Beispiel verfahren.

Im Anschluss an die Herstellung wurde die Instant-Getränkezusammensetzung bzw. das Agglomerat auf Stabilität, Handhabung, insbesondere im Hinblick auf Dosierbarkeit und Staubbildung, sowie Löslichkeitsverhalten untersucht:

Die erfindungsgemäße Instant-Getränkezusammensetzung neigte aufgrund der Ausbildung stabiler Agglomerate mit definierten Teilchengrößen und -formen nicht zur Bildung von Staub, was sowohl die Handhabung bei der Herstellung und Abfüllung als auch die Anwendung durch den Endverbraucher verbessert.

Was die Langzeitstabilität (Haltbarkeit) und Lagerstabilität der erfindungsgemäßen Zusammensetzung anbelangt, so ist diese auch über einen Zeitraum von mehreren Monaten gewährleistet, wie die Versuche der Anmelderin gezeigt haben. Insbesondere ist das erfindungsgemäße Agglomerat aufgrund der verbesserten Stabilität der Agglomeratmatrix bzw. des Agglomeratgerüsts infolge der Verwendung einer Kombination von Isomaltulose und von Saccharose verschiedenem Zucker (Maltodextrin) unter mechanischer Einwirkung stabil, insbesondere bei Einwirkung von Scherkräften (z. B. Rühren in Mischern zu Zwecken der Homogenisierung etc.), bei der Abfüllung des Agglomerats in handelsübliche Verpackungseinheiten in automatisierten Abfüllanlagen oder dergleichen.

Zur Untersuchung von Dosierbarkeit und Lösungsverhalten wurde das Agglomerat der erfindungsgemäßen Instant-Getränkezusammensetzung mit heißer oder kalter Milch aufgegossen, so dass ein nichtkariogenes und kalorienreduziertes Kakaogetränk resultierte. Das Agglomerat löste sich innerhalb kürzester Zeit ohne die Bildung von Verklumpungen auf und bildete sowohl in kalter als auch in heißer Milch eine stabile Lösung bzw. Suspension.

Was die organoleptischen Eigenschaften und Dosierbarkeit anbelangt, so sind diese optimal, da eine ausreichende, aber als natürlich empfundene Süße resultiert, insbesondere ohne einen künstlichen bzw. bitteren Beigeschmack, wie er insbesondere bei der übermäßigen Verwendung von Süßstoffen auftreten kann. Aufgrund der zusätzlichen Verwendung des von Saccharose verschiedenen Zuckers Maltodextrin wurde gegenüber einer Zusammensetzung ausschließlich auf Basis von Isomaltulose als alleinigem Agglomeratbildner also ein deutlich verbesserter Süßegrad bzw. Süßegeschmack erreicht, wobei das Geschmacksbild mit dem von saccharosebasierten Zusammensetzungen vergleichbar ist. In diesem Zusammenhang kann folglich auf den Einsatz einer Süßstoffkomponente verzichtet werden.

Zudem führt das Getränk auf Basis der erfindungsgemäßen Zusammensetzung im Vergleich zu herkömmlichen Instant-Getränkezusammensetzungen sowohl zu einer deutlich verringerten Kariogenität, da Isomaltulose von kariogenen Bakterien nicht verstoffwechselt wird, als auch zu einem deutlich reduzierten Brennwert.

Das erfindungsgemäße Beispiel wurde jeweils auch mit Zuckeralkoholen (nämlich Mannit, Erythrit, Sorbit, Isomaltit und Maltit), mit anderen von Saccharose verschiedenen Zuckern (nämlich Glucose und Fructose sowie deren Kombination) sowie mit Zuckeralkohol/Zuckergemischen (nämlich Mannit/Glucose-Gemischen, Verhältnis 20 : 1 bis 2 : 1) jeweils anstelle von Maltodextrin wiederholt, wobei diesbezüglich vergleichbare Ergebnisse erhalten wurden.

Im Ergebnis lassen sich unter Verwendung einer Kombination von Isomaltulose einerseits und Zuckeralkohol bzw. von Saccharose verschiedenem Zucker andererseits als Agglomeratbildner stabile und gut handhabbare Agglomerate herstellen. Auch die organoleptischen Eigenschaften sind optimiert.

## Patentansprüche

1. Kakaohaltige Instant-Getränkezusammensetzung, insbesondere zur Herstellung eines vorzugsweise nichtkariogenen und/oder kalorienreduzierten kakaohaltigen Instant-Getränks durch Aufbereiten mit einer trinkbaren Flüssigkeit, wobei die Zusammensetzung zumindest im Wesentlichen frei von Saccharose ist und wobei die Zusammensetzung in Form eines Granulats oder Agglomerats, insbesondere Agglomerats, vorliegt, wobei die Zusammensetzung
(a) als Granulat- oder Agglomeratbildner eine Kombination von Isomaltulose mit mindestens einem Zuckeraustauschstoff und/oder mit mindestens einem von Saccharose verschiedenen Zucker in einem Verhältnis [Isomaltulose : (Zuckeraustauschstoff und/oder von Saccharose verschiedener Zucker)] im Bereich von 40 : 1 bis 2 : 1 und in einer Menge von 30 bis 85 Gew.-%, bezogen auf die Zusammensetzung und/oder das Granulat oder Agglomerat, und
(b) Kakao, insbesondere Kakaopulver, sowie
(c) gegebenenfalls mindestens einen Aroma- und/oder Geschmacksbildner enthält,
wobei die Partikel des Granulats oder Agglomerats eine Druckfestigkeit, berechnet als Gewichtsbelastbarkeit pro Partikel, von mindestens 0,01 N aufweisen, wobei die Zusammensetzung, bezogen auf die Zusammensetzung, eine Gesamtrestfeuchte von 1 bis 5 Gew.-% aufweist und wobei das Granulat oder Agglomerat eine diskrete Teilchengrößenverteilung aufweist, wobei 90 % der Partikel eine Partikelgröße, bezogen auf mindestens eine Raumrichtung, von 0,02 bis 5 mm aufweisen,
wobei der Zuckeraustauschstoff ausgewählt ist aus der Gruppe von Erythrit, Mannit, Xylit, Sorbit, Isomaltit, Maltit, Lactit, Galactit und deren Mischungen, und/oder wobei der von Saccharose verschiedene Zucker ausgewählt ist aus der Gruppe von Mannose, Maltose, Glucose, Fructose, Lactose, Xylose, Maltodextrin und deren Mischungen und
wobei die Zusammensetzung mindestens einen lebensmittelkompatiblen Emulgator in einer Menge von 0,5 bis 1,5 Gew.-%, bezogen auf die Zusammensetzung und/oder das Granulat und/oder Agglomerat, enthält, wobei der lebensmittelkompatible Emulgator ausgewählt ist aus der Gruppe von Lecithinen, Monoglyceriden, Diglyceriden und deren Mischungen.

2. Zusammensetzung nach Anspruch 1,
wobei die Zusammensetzung den Granulat- oder Agglomeratbildner in einer Menge von 40 bis 85 Gew.-%, bezogen auf die Zusammensetzung und/oder das Granulat oder Agglomerat, enthält; und/oder
wobei die Zusammensetzung die Isomaltulose in einer Menge von 20 bis 70 Gew.-%, insbesondere 30 bis 70 Gew. %, vorzugsweise 40 bis 70 Gew.-%, besonders bevorzugt 50 bis 60 Gew.-%, bezogen auf die Zusammensetzung und/oder das Granulat oder Agglomerat, enthält.

3. Zusammensetzung nach Anspruch 1 oder 2, wobei die Zusammensetzung den Zuckeraustauschstoff einerseits und den von Saccharose verschiedenen Zucker andererseits in einem Verhältnis [Zuckeraustauschstoff : von Saccharose verschiedener Zucker] im Bereich von 100 : 1 bis 1 : 100, insbesondere 50 : 1 bis 1 : 50, vorzugsweise 30 : 1 bis 1 : 30, bevorzugt 20 : 1 bis 1 : 20, ganz besonders bevorzugt 10 : 1 bis 1 : 10, enthält.

4. Zusammensetzung nach einem der vorangehenden Ansprüche,
wobei die Zusammensetzung den von Saccharose verschiedenen Zucker und/oder den Zuckeraustauschstoff in einer Menge von 1 bis 50 Gew.-%, insbesondere 5 bis 20 Gew.-%, vorzugsweise 10 bis 15 Gew.-%, bezogen auf die Zusammensetzung und/oder das Granulat oder Agglomerat, enthält; und/oder
wobei die Zusammensetzung Kakao, insbesondere Kakaopulver, in einer Menge von 5 bis 50 Gew.-%, insbesondere 10 bis 50 Gew.-%, vorzugsweise 15 bis 40 Gew.-%, besonders bevorzugt 20 bis 25 Gew.-%, bezogen auf die Zusammensetzung und/oder das Granulat oder Agglomerat, enthält.

5. Zusammensetzung nach einem der vorangehenden Ansprüche,
wobei die Zusammensetzung den mindestens einen Aroma- und/oder Geschmacksbildner in einer Menge von 0,01 bis 50 Gew.-%, insbesondere 0,1 bis 25 Gew.-%, besonders bevorzugt 0,5 bis 20 Gew.-%, ganz besonders bevorzugt 1 bis 10 Gew.-%, bezogen auf die Zusammensetzung und/oder das Granulat oder Agglomerat, enthält; und/oder
wobei der mindestens eine Aroma- und/oder Geschmacksbildner ausgewählt ist aus der Gruppe von künstlichen Aroma- und/oder Aromastoffen, naturidentischen Aromen und/oder Aromastoffen, natürlichen Aromen und/oder Aromastoffen und deren Mischungen, insbesondere Vanillin; und/oder
wobei der mindestens eine Aroma- und/oder Geschmacksbildner ausgewählt ist aus der Gruppe von Vitaminen, Spurenelementen, Mineralstoffen und deren Mischungen.

6. Zusammensetzung nach einem der vorangehenden Ansprüche, wobei die Zusammensetzung den mindestens einen lebensmittelkompatiblen Emulgator in einer Menge von 0,2 bis 2 Gew.-%, vorzugsweise 0,5 bis 1,5 Gew.-%, bezogen auf die Zusammensetzung und/oder das Granulat und/oder Agglomerat, enthält.

7. Zusammensetzung nach einem der vorangehenden Ansprüche, wobei die Zusammensetzung mindestens einen Süßstoff enthält, insbesondere in einer Menge von 0,01 bis 5 Gew.-%, insbesondere 0,05 bis 2 Gew.-%, vorzugsweise 0,1 bis 1 Gew.-%, bezogen auf die Zusammensetzung und/oder das Granulat oder Agglomerat, insbesondere wobei der Süßstoff ausgewählt ist aus der Gruppe von Acesulfam, Aspartam, Aspartam-Acesulfam, Cyclamat, Saccharin, Sucralose, Thaumatin, Neophesperidin, Neotam, Alitam, Brazzein, Hernandulcin, Lugdunam, Monellin, Pentadin und Steviosid sowie deren Mischungen, insbesondere Aspartam, Cyclamat, Saccharin, Sucralose und Steviosid sowie deren Mischungen, bevorzugt Sucralose.

8. Zusammensetzung nach einem der vorangehenden Ansprüche,
wobei die Zusammensetzung Saccharose in einer Menge von höchstens 2 Gew.-%, insbesondere höchstens 1 Gew.-%, vorzugsweise höchstens 0,5 Gew.-%, besonders bevorzugt höchstens 0,1 Gew.-%, ganz besonders bevorzugt jedoch 0 Gew.-%, bezogen auf die Zusammensetzung und/oder das Granulat oder Agglomerat, enthält; und/oder
wobei die Zusammensetzung in Form eines kornförmigen und/oder zumindest im Wesentlichen kugelförmigen, insbesondere kornförmigen, Granulats oder Agglomerats vorliegt und/oder wobei die Teilchen und/oder Partikel der Zusammensetzung, insbesondere des Granulats oder Agglomerats, eine Druck- bzw. Berstfestigkeit von mindestens 0,05 N, vorzugsweise mindestens 0,1 N, bevorzugt mindestens 0,5 N, besonders bevorzugt mindestens 1 N, aufweisen und/oder wobei die Teilchen und/oder Partikel der Zusammensetzung, insbesondere des Granulats oder Agglomerats, eine Druck- bzw. Berstfestigkeit im Bereich von 0,01 N bis 10 N, insbesondere 0,05 N bis 5 N, vorzugsweise 0,1 N bis 3 N, bevorzugt 0,2 N bis 2,5 N, besonders bevorzugt 0,5 N bis 2 N, aufweisen.

9. Zusammensetzung nach einem der vorangehenden Ansprüche, wobei die Teilchengröße der Partikel der Zusammensetzung, insbesondere des Granulats oder Agglomerats, bezogen auf mindestens eine Raumrichtung, 0,01 bis 10 mm, insbesondere 0,02 bis 5 mm, vorzugsweise 0,1 bis 3 mm, beträgt; und/oder
wobei die mittlere Teilchengröße, insbesondere die mittlere Teilchengröße D₅₀, der Partikel der Zusammensetzung, insbesondere des Granulats oder Agglomerats, bezogen auf mindestens eine Raumrichtung, 0,05 bis 8 mm, insbesondere 0,1 bis 4 mm, vorzugsweise 0,2 bis 3 mm, beträgt; und/oder
wobei 95 % der Partikel des Granulats oder Agglomerats eine Partikelgröße, bezogen auf mindestens eine Raumrichtung, von 0,1 bis 3 mm, aufweisen; und/oder wobei das Granulat oder Agglomerat eine Schüttdichte von 100 bis 800 g/l, insbesondere 300 bis 600 g/l, vorzugsweise 400 bis 450 g/l, aufweist.

10. Zusammensetzung nach einem der vorangehenden Ansprüche,
wobei die Zusammensetzung, insbesondere das Granulat oder Agglomerat, bezogen auf die Zusammensetzung, insbesondere das Granulat oder Agglomerat, eine Gesamtrestfeuchte von 2 bis 4 Gew.-% aufweist; und/oder
wobei die Zusammensetzung in Wasser und wässrigen Medien, insbesondere Milch, zumindest im Wesentlichen, insbesondere vollständig, löslich und/oder suspendierbar ist.

11. Verfahren zur Herstellung einer kakaohaltigen Instant-Getränkezusammensetzung, insbesondere zur Herstellung eines vorzugsweise nichtkariogenen und/oder kalorienreduzierten kakaohaltigen Instant-Getränks durch Aufbereiten mit einer trinkbaren Flüssigkeit, in Form eines Granulats oder Agglomerats, insbesondere wie in einem der vorangehenden Ansprüche definiert, wobei das Verfahren die folgenden Verfahrensschritte umfasst:
a) Herstellung einer Mischung, welche (a) mindestens einen Granulat- oder Agglomeratbildner auf Basis einer Kombination von Isomaltulose mit mindestens einem von Saccharose verschiedenen Zucker und/oder mit mindestens einem Zuckeraustauschstoff in einem Verhältnis [Isomaltulose : (Zuckeraustauschstoff und/oder von Saccharose verschiedener Zucker)] im Bereich von 40 : 1 bis 2 : 1 und (b) Kakao, insbesondere Kakaopulver, (c) gegebenenfalls mindestens einen Aroma- und/oder Geschmacksbildner sowie (d) mindestens einen lebensmittelkompatiblen Emulgator enthält;
b) nachfolgende Herstellung eines Granulats oder Agglomerats aus der in Schritt a) hergestellten Mischung durch Trocknung unter Einstellung einer Druckfestigkeit, berechnet als Gewichtsbelastbarkeit pro Partikel, von mindestens 0,01 N, einer Gesamtrestfeuchte von 1 bis 5 Gew.-%, bezogen auf das Granulat oder Agglomerat, und einer diskreten Teilchengrößenverteilung, wobei 90 % der Partikel eine Partikelgröße, bezogen auf mindestens eine Raumrichtung, von 0,02 bis 5 mm aufweisen,
wobei der Zuckeraustauschstoff ausgewählt ist aus der Gruppe von Erythrit, Mannit, Xylit, Sorbit, Isomaltit, Maltit, Lactit, Galactit und deren Mischungen, und/oder wobei der von Saccharose verschiedene Zucker ausgewählt ist aus der Gruppe von Mannose, Maltose, Glucose, Fructose, Lactose, Xylose, Maltodextrin und deren Mischungen und wobei der lebensmittelkompatible Emulgator ausgewählt ist aus der Gruppe von Lecithinen, Monoglyceriden, insbesondere Monoglyceriden von Speisefettsäuren, Diglyceriden, insbesondere Diglyceriden von Speisefettsäuren, und deren Mischungen.

12. Instant-Getränkezusammensetzung, insbesondere nach einem der Ansprüche 1 bis 10, insbesondere zur Herstellung eines vorzugsweise nichtkariogenen und/oder kalorienreduzierten kakaohaltigen Instant-Getränks durch Aufbereiten mit einer trinkbaren Flüssigkeit, insbesondere mit Wasser oder einem wässrigen Medium, vorzugsweise Milch, wobei die Zusammensetzung erhältlich ist durch ein Verfahren nach Anspruch 11.

13. Verwendung einer Instant-Getränkezusammensetzung nach einem der Ansprüche 1 bis 10 zur Herstellung eines vorzugsweise nichtkariogenen und/oder kalorienreduzierten kakaohaltigen Instant-Getränks.

## Claims

1. Cocoa-containing instant drinks composition, in particular for producing a preferably noncariogenic and/or calorie-reduced cocoa-containing instant drink by preparation with a potable liquid, wherein the composition is at least substantially free from sucrose, and wherein the composition is in the form of granules or agglomerate, in particular agglomerate, wherein the composition contains
(a) as granule- or agglomerate-former a combination of isomaltulose with at least one sugar replacer and/or at least one sugar different from sucrose in a ratio [isomaltulose: (sugar replacer and/or sugar different from sucrose)] in the range from 40:1 to 2:1 and in an amount from 30 to 85% by weight, based on the composition and/or the granules or agglomerate, and
(b) cocoa, in particular cocoa powder, and also
(c) optionally at least one aroma- and/or taste-former,
wherein the particles of the granules or agglomerate have a compressive strength, calculated as weight load bearing capacity per particle, of at least 0.01 N, wherein the composition, based on the composition, has a total residual moisture from 1 to 5% by weight, and wherein the granules or agglomerate have a discrete particle size distribution, wherein 90% of the particles have a particle size, based on at least one spatial direction, from 0.02 to 5 mm,
wherein the sugar replacer is selected from the group of erythritol, mannitol, xylitol, sorbitol, isomaltitol, maltitol, lactitol, galactitol and mixtures thereof, and/or wherein the sugar different from sucrose is selected from the group of mannose, maltose, glucose, fructose, lactose, xylose, maltodextrin and mixtures thereof and
wherein the composition contains a food-compatible emulsifier in an amount from 0.5 to 1.5% by weight, based on the composition and/or the granules and/or agglomerate, wherein the food-compatible emulsifier is selected from the group of lecithins, monoglycerides, diglycerides and mixtures thereof.

2. Composition according to Claim 1,
wherein the composition contains the granule- or agglomerate-former in an amount from 40 to 85% by weight, based on the composition and/or the granules or agglomerate; and/or
wherein the composition contains the isomaltulose in an amount from 20 to 70% by weight, in particular 30 to 70% by weight, preferably 40 to 70% by weight, particularly preferably 50 to 60% by weight, based on the composition and/or the granules or agglomerate.

3. Composition according to Claim 1 or 2, wherein the composition contains the sugar replacer on the one hand and the sugar different from sucrose on the other in a ratio [sugar replacer: sugar different from sucrose] in the range from 100:1 to 1:100, in particular 50:1 to 1:50, preferably 30:1 to 1:30, more preferably 20:1 to 1:20, very particularly preferably 10:1 to 1:10.

4. Composition according to any one of the preceding claims,
wherein the composition contains the sugar different from sucrose and/or the sugar replacer in an amount from 1 to 50% by weight, in particular 5 to 20% by weight, preferably 10 to 15% by weight, based on the composition and/or the granules or agglomerate; and/or
wherein the composition contains cocoa, in particular cocoa powder, in an amount from 5 to 50% by weight, in particular 10 to 50% by weight, preferably 15 to 40% by weight, particularly preferably 20 to 25% by weight, based on the composition and/or the granules or agglomerate.

5. Composition according to any one of the preceding claims,
wherein the composition contains the at least one aroma- and/or taste-former in an amount from 0.01 to 50% by weight, in particular 0.1 to 25% by weight, particularly preferably 0.5 to 20% by weight, very particularly preferably 1 to 10% by weight, based on the composition and/or the granules or agglomerate; and/or
wherein the at least one aroma- and/or taste former is selected from the group of synthetic aromas and/or aroma compounds, nature-identical aromas and/or aroma compounds, natural aromas and/or aroma compounds and mixtures thereof, in particular vanillin; and/or
wherein the at least one aroma- and/or taste-former is selected from the group of vitamins, trace elements, minerals and mixtures thereof.

6. Composition according to any one of the preceding claims, wherein the composition contains the at least one food-compatible emulsifier in an amount from 0.2 to 2% by weight, preferably 0.5 to 1.5% by weight, based on the composition and/or the granules and/or agglomerate.

7. Composition according to any one of the preceding claims, wherein the composition contains at least one noncalorific sweetener, in particular in an amount from 0.01 to 5% by weight, in particular 0.05 to 2% by weight, preferably 0.1 to 1% by weight, based on the composition and/or the granules or agglomerate, in particular wherein the noncalorific sweetener is selected from the group of acesulfame, aspartame, aspartame-acesulfame, cyclamate, saccharine, sucralose, thaumatin, neophesperidine, neotame, alitame, brazzein, hernandulcin, lugduname, monellin, pentadin and stevioside, and also mixtures thereof, in particular aspartame, cyclamate, saccharine, sucralose and stevioside and also mixtures thereof, preferably sucralose.

8. Composition according to any one of the preceding claims,
wherein the composition contains sucrose in an amount of at most 2% by weight, in particular at most 1% by weight, preferably at most 0.5% by weight, particularly preferably at most 0.1% by weight, very particularly preferably, however, 0% by weight, based on the composition and/or the granules or agglomerate; and/or
wherein the composition is present in the form of grain-type and/or at least substantially spherical, in particular grain-type, granules or agglomerate, and/or wherein the particles of the composition, in particular of the granule or agglomerate, have a compressive strength or bursting strength of at least 0.05 N, preferably at least 0.1 N, more preferably at least 0.5 N, particularly preferably at least 1 N, and/or
wherein the particles of the composition, in particular of the granules or agglomerate, have a compressive strength or bursting strength in the range from 0.01 N to 10 N, in particular 0.05 N to 5 N, preferably 0.1 N to 3 N, more preferably 0.2 N to 2.5 N, particularly preferably 0.5 N to 2 N.

9. Composition according to any one of the preceding claims, wherein the particle size of the particles of the composition, in particular of the granules or agglomerate, based on at least one spatial direction, is 0.01 to 10 mm, in particular 0.02 to 5 mm, preferably 0.1 to 3 mm; and/or
wherein the median particle size, in particular the median particle size D₅₀, of the particles of the composition, in particular of the granules or agglomerate, based on at least one spatial direction, is 0.05 to 8 mm, in particular 0.1 to 4 mm, preferably 0.2 to 3 mm; and/or
wherein 95% of the particles of the granules or agglomerate have a particle size, based on at least one spatial direction, from 0.1 to 3 mm; and/or
wherein the granules or agglomerate have a bulk density from 100 to 800 g/l, in particular 300 to 600 g/l, preferably 400 to 450 g/l.

10. Composition according to any one of the preceding claims, wherein the composition, in particular the granules or agglomerate, based on the composition, in particular the granules or agglomerate, has a total residual moisture from 2 to 4% by weight; and/or
wherein the composition is at least substantially, in particular completely, soluble and/or suspendable in water and aqueous media, in particular milk.

11. Method for producing a cocoa-containing instant drinks composition, in particular for producing a preferably noncariogenic and/or calorie-reduced cocoa-containing instant drink by preparation with a potable liquid, in the form of granules or agglomerate, in particular as defined in any one of the preceding claims, wherein the method comprises the following method steps:
a) production of a mixture which contains (a) at least one granule- or agglomerate-former based on a combination of isomaltulose with at least one sugar different from sucrose and/or with at least one sugar replacer in a ratio [isomaltulose: (sugar replacer and/or sugar different from sucrose)] in the range from 40:1 to 2:1 and (b) cocoa, in particular cocoa powder, (c) optionally at least one aroma- and/or taste-former and also (d) at least one food-compatible emulsifier;
b) subsequent production of granules or an agglomerate from the mixture produced in step a) by drying or setting a compressive strength calculated as weight bearing capacity per particle of at least 0.01 N, a total residual moisture from 1 to 5% by weight, based on the granules or agglomerate, and a discrete particle size distribution, wherein 90% of the particles have a particle size based on at least one spatial direction, from 0.02 to 5 mm,
wherein the sugar replacer is selected from the group of erythritol, mannitol, xylitol, sorbitol, isomaltitol, maltitol, lactitol, galactitol and mixtures thereof, and/or wherein the sugar different from sucrose is selected from the group of mannose, maltose, glucose, fructose, lactose, xylose, maltodextrin and mixtures thereof and
wherein the food-compatible emulsifier is selected from the group of lecithins, monoglycerides, in particular monoglycerides of edible fatty acids, diglycerides, in particular diglycerides of edible fatty acids, and mixtures thereof.

12. Instant drinks composition, in particular as claimed in any one of claims 1 to 10, in particular for producing a preferably noncariogenic and/or calorie-reduced cocoa-containing instant drink by preparation with a potable liquid, in particular with water or an aqueous medium, preferably milk, wherein the composition is obtainable by a method according to Claim 11.

13. Use of an instant drinks composition according to any one of Claims 1 to 10 for producing a preferably noncariogenic and/or calorie-reduced cocoa-containing instant drink.

## Revendications

1. Composition de boisson instantanée contenant du cacao, notamment pour la fabrication d'une boisson instantanée contenant du cacao, de préférence non cariogène et/ou à teneur réduite en calories, par préparation avec un liquide buvable, la composition étant au moins essentiellement exempte de saccharose et la composition se présentant sous la forme d'un granulat ou d'un agglomérat, notamment d'un agglomérat, la composition contenant
(a) en tant qu'agent de formation d'un granulat ou d'un agglomérat, une combinaison d'isomaltulose avec au moins un produit de remplacement de sucre et/ou avec au moins un sucre différent du saccharose en un rapport [isomaltulose:(produit de remplacement de sucre et/ou sucre différent du saccharose)] dans la plage allant de 40:1 à 2:1, et en une quantité de 30 à 85 % en poids, par rapport à la composition et/ou au granulat ou agglomérat, et
(b) du cacao, notamment de la poudre de cacao, ainsi que
(c) éventuellement au moins un agent aromatisant et/ou gustatif,
les particules du granulat ou de l'agglomérat présentant une résistance à la pression, calculée en tant que charge en poids maximale par particule, d'au moins 0,01 N, la composition présentant, par rapport à la composition, une humidité résiduelle totale de 1 à 5 % en poids, et le granulat ou l'agglomérat présentant une distribution des tailles de particules discrète selon laquelle 90 % des particules présentent une taille de particule, par rapport à au moins une dimension de l'espace, de 0,02 à 5 mm,
le produit de remplacement du sucre étant choisi dans le groupe constitué par l'érythritol, le mannitol, le xylitol, le sorbitol, l'isomaltitol, le maltitol, le lactitol, le galactitol et leurs mélanges, et/ou le sucre différent du saccharose étant choisi dans le groupe constitué par le mannose, le maltose, le glucose, le fructose, le lactose, le xylose, la maltodextrine et leurs mélanges, et
la composition contenant au moins un émulsifiant compatible avec les produits alimentaires en une quantité de 0,5 à 1,5 % en poids, par rapport à la composition et/ou au granulat et/ou à l'agglomérat, l'émulsifiant compatible avec les produits alimentaires étant choisi dans le groupe constitué par les lécithines, les monoglycérides, les diglycérides et leurs mélanges.

2. Composition selon la revendication 1, dans laquelle la composition contient l'agent de formation d'un granulat ou d'un agglomérat en une quantité de 40 à 85 % en poids, par rapport à la composition et/ou au granulat ou agglomérat ; et/ou
la composition contient l'isomaltulose en une quantité de 20 à 70 % en poids, notamment de 30 à 70 % en poids, de préférence de 40 à 70 % en poids, de manière particulièrement préférée de 50 à 60 % en poids, par rapport à la composition et/ou au granulat ou agglomérat.

3. Composition selon la revendication 1 ou 2, dans laquelle la composition contient d'une part le produit de remplacement du sucre et d'autre part le sucre différent du saccharose en un rapport [produit de remplacement de sucre:sucre différent du saccharose)] dans la plage allant de 100:1 à 1:100, notamment de 50:1 à 1:50, de préférence de 30:1 à 1:30, de préférence de 20:1 à 1:20, de manière tout particulièrement préférée de 10:1 à 1:10.

4. Composition selon l'une quelconque des revendications précédentes, dans laquelle la composition contient le sucre différent du saccharose et/ou le produit de remplacement du sucre en une quantité de 1 à 50 % en poids, notamment de 5 à 20 % en poids, de préférence de 10 à 15 % en poids, par rapport à la composition et/ou au granulat ou agglomérat ; et/ou
la composition contient le cacao, notamment la poudre de cacao, en une quantité de 5 à 50 % en poids, notamment de 10 à 50 % en poids, de préférence de 15 à 40 % en poids, de manière particulièrement préférée de 20 à 25 % en poids, par rapport à la composition et/ou au granulat ou agglomérat.

5. Composition selon l'une quelconque des revendications précédentes, dans laquelle la composition contient ledit au moins un agent aromatisant et/ou gustatif en une quantité de 0,01 à 50 % en poids, notamment de 0,1 à 25 % en poids, de manière particulièrement préférée de 0,5 à 20 % en poids, de manière tout particulièrement préférée de 1 à 10 % en poids, par rapport à la composition et/ou au granulat ou agglomérat ; et/ou
ledit au moins un agent aromatisant et/ou gustatif est choisi dans le groupe constitué par les arômes et/ou les aromatisants artificiels, les arômes et/ou les aromatisants identiques à la nature, les arômes et/ou les aromatisants naturels, et leurs mélanges, notamment la vanilline ; et/ou
ledit au moins un agent aromatisant et/ou gustatif est choisi dans le groupe constitué par les vitamines, les oligoéléments, les minéraux et leurs mélanges.

6. Composition selon l'une quelconque des revendications précédentes, dans laquelle la composition contient ledit au moins un émulsifiant compatible avec les produits alimentaires en une quantité de 0,2 à 2 % en poids, de préférence de 0,5 à 1,5 % en poids, par rapport à la composition et/ou au granulat et/ou à l'agglomérat.

7. Composition selon l'une quelconque des revendications précédentes, dans laquelle la composition contient au moins un édulcorant, notamment en une quantité de 0,01 à 5 % en poids, notamment de 0,05 à 2 % en poids, de préférence de 0,1 à 1 % en poids, par rapport à la composition et/ou au granulat ou agglomérat, l'édulcorant étant notamment choisi dans le groupe constitué par l'acésulfame, l'aspartame, l'aspartame-acésulfame, le cyclamate, la saccharine, le sucralose, la thaumatine, la néophespéridine, le néotame, l'alitame, la brazzéine, l'hernandulcine, le lugduname, la monelline, la pentadine et le stévioside, ainsi que leurs mélanges, notamment l'aspartame, le cyclamate, la saccharine, le sucralose et le stévioside, ainsi que leurs mélanges, de préférence le sucralose.

8. Composition selon l'une quelconque des revendications précédentes, dans laquelle la composition contient du saccharose en une quantité d'au plus 2 % en poids, notamment d'au plus 1 % en poids, de préférence d'au plus 0,5 % en poids, de manière particulièrement préférée d'au plus 0,1 % en poids, de manière tout particulièrement préférée toutefois de 0 % en poids, par rapport à la composition et/ou au granulat ou agglomérat ; et/ou
dans laquelle la composition se présente sous la forme d'un granulat ou agglomérat particulaire et/ou au moins essentiellement sphérique, notamment particulaire, et/ou dans laquelle les particules et/ou les particules de la composition, notamment du granulat ou de l'agglomérat, présentent une résistance à la pression ou à l'éclatement d'au moins 0,05 N, de préférence d'au moins 0,1 N, de préférence d'au moins 0,5 N, de manière particulièrement préférée d'au moins 1 N, et/ou dans laquelle les particules et/ou les particules de la composition, notamment du granulat ou de l'agglomérat, présentent une résistance à la pression ou à l'éclatement dans la plage allant de 0,01 N à 10 N, notamment de 0,05 N à 5 N, de préférence de 0,1 N à 3 N, de préférence de 0,2 N à 2,5 N, de manière particulièrement préférée de 0,5 N à 2 N.

9. Composition selon l'une quelconque des revendications précédentes, dans laquelle la taille de particule des particules de la composition, notamment du granulat ou de l'agglomérat, par rapport à au moins une dimension de l'espace, est de 0,01 à 10 mm, notamment de 0,02 à 5 mm, de préférence de 0,1 à 3 mm ; et/ou
dans laquelle la taille de particule moyenne, notamment la taille de particule moyenne D₅₀, des particules de la composition, notamment du granulat ou de l'agglomérat, par rapport à au moins une dimension de l'espace, est de 0,05 à 8 mm, notamment de 0,1 à 4 mm, de préférence de 0,2 à 3 mm ; et/ou
dans laquelle 95 % des particules du granulat ou de l'agglomérat présentent une taille de particule, par rapport à au moins une direction de l'espace, de 0,1 à 3 mm ; et/ou
dans laquelle le granulat ou l'agglomérat présente une densité apparente de 100 à 800 g/l, notamment de 300 à 600 g/l, de préférence de 400 à 450 g/l.

10. Composition selon l'une quelconque des revendications précédentes, dans laquelle la composition, notamment le granulat ou l'agglomérat, présente, par rapport à la composition, notamment au granulat ou agglomérat, une humidité résiduelle totale de 2 à 4 % en poids ; et/ou
dans laquelle la composition est au moins essentiellement, notamment entièrement, soluble et/ou suspensible dans l'eau et les milieux aqueux, notamment le lait.

11. Procédé de fabrication d'une composition de boisson instantanée contenant du cacao, notamment pour la fabrication d'une boisson instantanée contenant du cacao, de préférence non cariogène et/ou à teneur réduite en calories, par préparation avec un liquide buvable, sous la forme d'un granulat ou d'un agglomérat, notamment telle que définie dans l'une quelconque des revendications précédentes, le procédé comprenant les étapes de procédé suivantes :
a) la fabrication d'un mélange, qui contient (a) au moins un agent de formation d'un granulat ou d'un agglomérat à base d'une combinaison d'isomaltulose avec au moins un sucre différent du saccharose et/ou avec au moins un produit de remplacement de sucre en un rapport [isomaltulose:(produit de remplacement de sucre et/ou sucre différent du saccharose)] dans la plage allant de 40:1 à 2:1, et (b) du cacao, notamment de la poudre de cacao, (c) éventuellement au moins un agent aromatisant et/ou gustatif, ainsi que (d) au moins un émulsifiant compatible avec les produits alimentaires ;
b) la fabrication ultérieure d'un granulat ou d'un agglomérat à partir du mélange fabriqué à l'étape a) par séchage avec ajustement d'une résistance à la pression, calculée en tant que charge en poids maximale par particule, d'au moins 0,01 N, d'une humidité résiduelle totale de 1 à 5 % en poids, par rapport au granulat ou à l'agglomérat, et d'une distribution des tailles de particules discrète selon laquelle 90 % des particules présentent une taille de particule, par rapport à au moins une dimension de l'espace, de 0,02 à 5 mm,
le produit de remplacement du sucre étant choisi dans le groupe constitué par l'érythritol, le mannitol, le xylitol, le sorbitol, l'isomaltitol, le maltitol, le lactitol, le galactitol et leurs mélanges, et/ou le sucre différent du saccharose étant choisi dans le groupe constitué par le mannose, le maltose, le glucose, le fructose, le lactose, le xylose, la maltodextrine et leurs mélanges, et
l'émulsifiant compatible avec les produits alimentaires étant choisi dans le groupe constitué par les lécithines, les monoglycérides, notamment les monoglycérides d'acides gras alimentaires, les diglycérides, notamment les diglycérides d'acides gras alimentaires, et leurs mélanges.

12. Composition de boisson instantanée, notamment selon l'une quelconque des revendications 1 à 10, notamment pour la fabrication d'une boisson instantanée contenant du cacao, de préférence non cariogène et/ou à teneur réduite en calories, par préparation avec un liquide buvable, notamment avec de l'eau ou un milieu aqueux, de préférence du lait, la composition pouvant être obtenue par un procédé selon la revendication 11.

13. Utilisation d'une composition de boisson instantanée selon l'une quelconque des revendications 1 à 10 pour la fabrication d'une boisson instantanée contenant du cacao, de préférence non cariogène et/ou à teneur réduite en calories.
